(19)

**Europäisches Patentamt**
**European Patent Office**
**Office européen des brevets**

(11) **EP 3 865 825 B1**

(12) **EUROPEAN PATENT SPECIFICATION**

(45) Date of publication and mention
of the grant of the patent:
**31.05.2023 Bulletin 2023/22**

(21) Application number: **20194939.3**

(22) Date of filing: **07.09.2020**

(51) International Patent Classification (IPC):
***G01D 5/20*** *(2006.01)*

(52) Cooperative Patent Classification (CPC):
**G01D 5/2053;** G01D 2205/771

(54) **INDUCTIVE ANGULAR SENSOR ARRANGEMENT, SYSTEM AND MOTOR**

INDUKTIVE WINKELSENSORANORDNUNG, SYSTEM UND MOTOR

AGENCEMENT DE CAPTEUR ANGULAIRE INDUCTIF, SYSTÈME ET MOTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.08.2021 Bulletin 2021/33**

(73) Proprietor: **Melexis Technologies SA
2022 Bevaix (CH)**

(72) Inventor: **LUGANI, Lorenzo
2022 Bevaix (CH)**

(74) Representative: **Jacobs, Lambert
Inventrans BV
Overwegstraat 24
3740 Bilzen (BE)**

(56) References cited:
**US-A1- 2012 293 166      US-A1- 2019 056 251
US-A1- 2020 088 549      US-A1- 2020 116 529**

**Description**

**Field of the invention**

The present invention relates in general to the field of inductive angular sensors, and more in particular to so called "C-shaped" inductive angular sensors, and to a system and a motor comprising such an angular sensor.

**Background of the invention**

Various inductive angle sensors are known in the art, for example for motor control purposes. They typically comprise an excitation coil (also known as "transmitter coil") and multiple detection coils (also known as "receiver coils"). The transmitter coil and the receiving coils are inductively coupled to one another. The amount of coupling may be influenced by a coupling element (also known as "target") mounted in the vicinity of the transmitter and receiver coils. The excitation coil may for example be excited with an AC signal, which induces eddy currents in the target. The receiving coils will generate signals caused by the eddy currents in the target and the current in the transmitting coil. The signals from the receiving coils are analysed in an electronic circuit, and an angular position can be determined based on these signals in known manners.

EP0909955(A1) describes an inductive angle sensor known in the art. Another angular sensor arrangement comprising a rotatable target, one excitation coil and several detection coils is described in US2020116529 (A1).

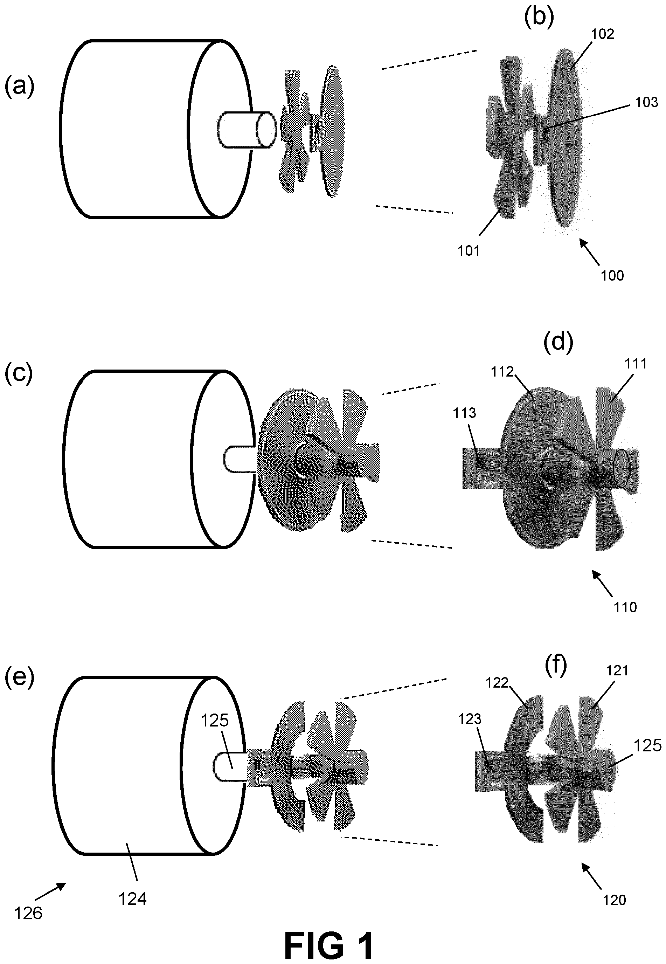

FIG. 1 shows a few examples of motor assemblies with an inductive angle sensor system.

**FIG. 1(a)** shows an example of a motor assembly comprising a motor and an 0-shaped induction sensor arrangement 100, mounted in a so called "end-of-shaft configuration". **FIG. 1(b)** shows the target 101 having five lobes, and the substrate 102 comprising the transmitter and receiver coils and an integrated circuit 103 in enlarged view.

**FIG. 1(c)** shows an example of another motor assembly comprising a motor and an 0-shaped induction sensor arrangement 110, mounted in a so called "through-shaft configuration". FIG. **1(d)** shows the target 111 having five lobes, and the substrate 112 comprising the transmitter and receiver coils and an integrated circuit 113 in enlarged view.

**FIG. 1(e)** shows an example of another motor assembly comprising a motor and a C-shaped induction sensor arrangement 120, mounted in a so called "side-of-shaft configuration". **FIG. 1(f)** shows the target 121 having five lobes, and the substrate 122 comprising the transmitter and receiver coils and an integrated circuit 123 in enlarged view.

The present invention is related to "C-shaped induction sensors". An important advantage of C-shaped induction sensors as compared to O-shaped induction sensors is that they require a smaller substrate (e.g. printed circuit board), but a disadvantage of C-shaped induction sensors is that they typically have a lower accuracy than O-shaped induction sensors.

**Summary of the invention**

It is an object of embodiments of the present invention to provide a particular type of angular sensor arrangement, known as a C-shaped inductive angular sensor arrangement, and an angular sensor system and a motor assembly comprising same.

It is an object of embodiments of the present invention to provide such an angular sensor arrangement wherein the position can be determined with improved accuracy (as compared to prior art systems).

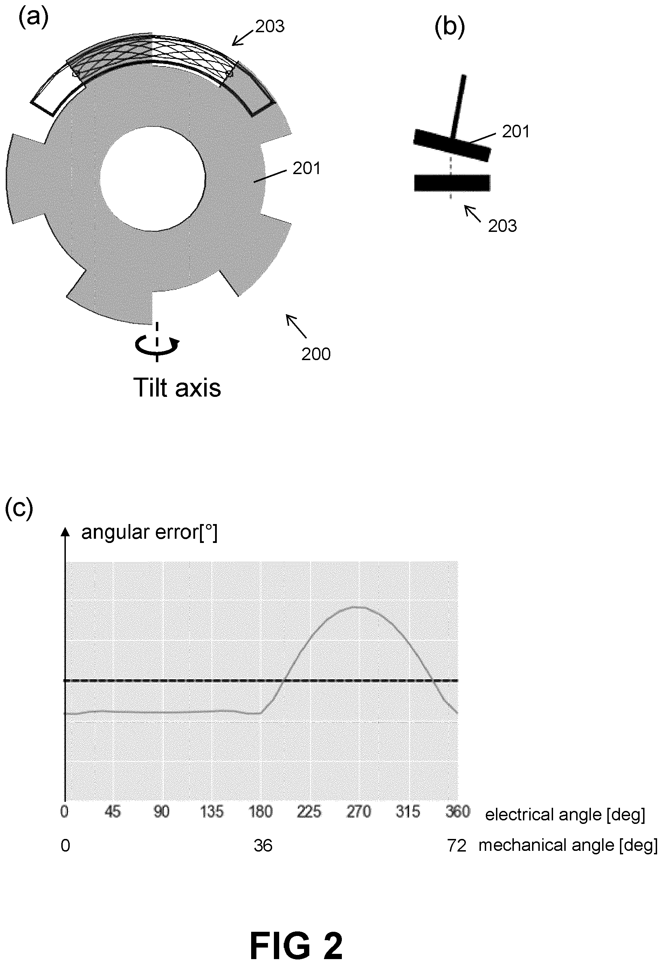

It is an object of embodiments of the present invention to provide such an angular sensor arrangement which is less sensitive to mechanical mounting tolerances, in particular mechanical tilt, e.g. as illustrated in FIG. 2(b).

These objectives are accomplished by embodiments of the present invention.

According to a first aspect, the present invention provides an angular sensor arrangement for determining an angular position of a target rotatable about an axis, the angular sensor arrangement comprising: said target having a rotational symmetric shape with a number (N) of lobes, the rotational symmetrical shape having an angular periodicity (Tap) of 360° divided by said number (N) of lobes; a coil arrangement comprising at least one excitation coil and a plurality of detection coils, wherein the plurality of detection coils define a first opening angle (Roa) smaller than 330°, and wherein the at least one excitation coil defines a second opening angle (Eoa) larger than the first opening angle; wherein the target has a "target duty cycle" in the range from 10% to 45%, defined as the ratio of a first area and a second area, the first area being defined by an overlap of a perpendicular projection of a single target lobe on the transmission coils, the second area being defined as the area of the at least one excitation coil over a single electrical period of the target, or wherein said lobes of the target define an opening angle (Loa) in the range from 10% to 45% of said angular periodicity (Tap) of the target.

This sensor arrangement belongs to a specific category of sensor arrangements known as "C-shaped inductive sensor arrangements", as can easily be recognized by the angular span (or "opening angle") of the detection coils being smaller than 360°, e.g. smaller than 330°.

Or stated in simple terms, the present invention is directed to a C-shaped inductive sensor arrangement wherein the "opening angle" of the lobes, or "lobe width" is 10% to 45%, or from 10% to 40%, or from 10% to 35%, or from 10% to 30%, or from 15% to 40%, or from 15% to 35%, or from 20% to 30% of the "angular period" of the target. With "angular periodicity" or "periodicity angle" is meant that the shape appears the same after being rotated by an integer multiple of said "periodicity angle".

The lobes may extend radially inwards or radially outwards from an annular shape.

In an embodiment, said lobes define an "opening angle (Loa) relative to the angular periodicity" of the target, or a "target duty cycle" in the range from 15% to 45%, or from 20% to 45%, or from 10% to 40%, or from 10% to 35%, or from 10% to 30%, or from 15% to 40%, or from 15% to 35%, or from 20% to 30%.

In an embodiment, the number of lobes is a value in the range from 3 to 12, or from 4 to 12.

In an embodiment, the target has only three lobes, angularly spaced by 120°.

In an embodiment, the target has only four lobes, angularly spaced by 90°.

In an embodiment, the target has only five lobes, angularly spaced by 72°.

In an embodiment, the target has only six lobes, angularly spaced by 60°.

In an embodiment, the target has only eight lobes, angularly spaced by 45°.

In an embodiment, the target has only ten lobes, angularly spaced by 36°.

In an embodiment, the target has only twelve lobes, angularly spaced by 30°.

In an embodiment, the target is or comprises a metal sheet.

In an embodiment, the target is or comprises a substrate with at least one conductive layer.

In an embodiment, the target has a disk or annular shape with said number of lobes extending radially outwards from said disk or annular shape.

In an embodiment, the target has a disk or annular shape with said number of lobes extending radially inwards from said disk or annular shape.

In an embodiment, the number of detection coils is at least two.

In an embodiment, the number of detection coils is at least three.

In an embodiment, the number of detection coils is only two.

In an embodiment, the number of detection coils is only three.

In an embodiment, the at least one excitation coil has a shape defined by a circumference of a first annular sector segment having a first inner radius and a first outer radius and said second opening angle.

In an embodiment, the plurality of detection coils are located in a second annular sector segment having a second inner radius and a second outer radius and said first opening angle, the second annular segment being located within the first annular segment defined by the at least one excitation coil.

In an embodiment, a transmitter coil side opening (Txso) defined as the difference between the opening angle (Eoa) of the at least one excitation coil and the opening angle (Roa) of the at least one detection coil divided by two, is a value in the range from 25% to 75% or from 25% to 50% of the target angular period.

It is an advantage of a C-shaped inductive angular sensor having both a target duty cycle smaller than 50% and a Tx side opening (expressed in % of the angular target period) of at least 25%, because this allows to build a sensor arrangement having a low intrinsic non-linearity which is highly compact. Indeed, while it is technically possible to decrease the intrinsic non-linearity by increasing the Tx side opening, this typically requires much more space, space which is not always available inside or outside the motor. In contrast, when using a target with a smaller Tdc (e.g. smaller than 50% or smaller than 45% or smaller than 40%), the same (low) intrinsic nonlinearity error can be obtained with a smaller Txso, i.e. without the need to excessive area.

In an embodiment, the Tx side opening is at least 30% of the target angular periodicity (Tap), or at least 35%, or at least 40%, or least least 45%, or at least 50%, or at least 55%, or at least 60%, or at least 65%, or at least 70%.

In an embodiment, the Tx side opening is at most 70% of the target angular periodicity (Tap), or at most 65%, or at most 60%, or at most 55%, or at most 50%, or at most 45%, or at most 40%, or at most 35%, or at most 30%.

In an embodiment, the target has only five lobes, and the angular periodicity (Tap) of the target is 72°, and the lobes have an opening angle (Loa) in the range from 13° to 23°, and the receiving coils have an angular opening (Rao) in the range from 69° to 75°; and the at least one excitation coil has an opening angle (Eoa) of at least 100° or at least 105°,or at least 110°, or at least 120°, or at least 130°.

It is an advantage of this angular sensor arrangement that it provides at the same time a very low sensitivity to tilt (thanks to the relatively low target duty cycle), and a very low intrinsic non-linearity error (thanks to the Tx side opening).

According to a second aspect, the present invention provides an angular sensor system, comprising: an angular sensor arrangement according to the first aspect, and a semiconductor device operatively connected to the at least one excitation coil and configured for exciting the at least one excitation coil with an alternating current, and operatively connected to the plurality of detection coils and configured for receiving signals from the detection coils, and further configured for determining the angular position of the target relative to the coils based on the received signals.

In an embodiment, the angular sensor system further comprises a substrate comprising said semiconductor device and said at least one excitation coil and said plurality of detection coils.

The semiconductor device is preferably mounted on the printed circuit board that comprises the at least one excitation coil and the plurality of receiving coils.

According to a third aspect, the present invention also provides a motor assembly comprising: an electrical motor having a rotatable shaft and a housing; an angular sensor arrangement according to the first aspect, or an angular sensor system according to the second aspect, wherein the target is configured for rotating along with the rotatable shaft, and wherein the coils are stationary with respect to the housing.

In an embodiment, the motor is a through-shaft motor.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

## Brief description of the drawings

**FIG. 1(a) to FIG. 1(f)** show several motor assemblies known in the art. FIG. 1(a) and FIG. 1(b) show a motor assembly with an O-shaped inductive angular position sensor assembly mounted in an end-of-shaft configuration. FIG. 1(c) and FIG. 1(d) show a motor assembly with an O-shaped inductive angular position sensor assembly mounted in a through-shaft configuration. FIG. 1(e) and FIG. 1(f) show a motor assembly with a C-shaped inductive angular position sensor assembly mounted in a side-of-shaft configuration.

**FIG. 2(a) to FIG. 2(c)** illustrate a problem underlying the present invention. **FIG. 2(a)** is a schematic representation of a C-shaped inductive angular position sensor. Ideally the target on the one hand, and the substrate comprising the coils on the other hand, are located in two virtual planes which are perfectly parallel to one another, but in practice there is always some tilt. **FIG. 2(b)** illustrates "mechanical tilt" between the target and the substrate containing the coils. **FIG. 2(c)** shows an exemplary waveform illustrating an angular error waveform as a function of the angular position of the target, over one electrical period, in the presence of mechanical tilt illustrated in FIG. 2(b). The error value is shown in arbitrary units.

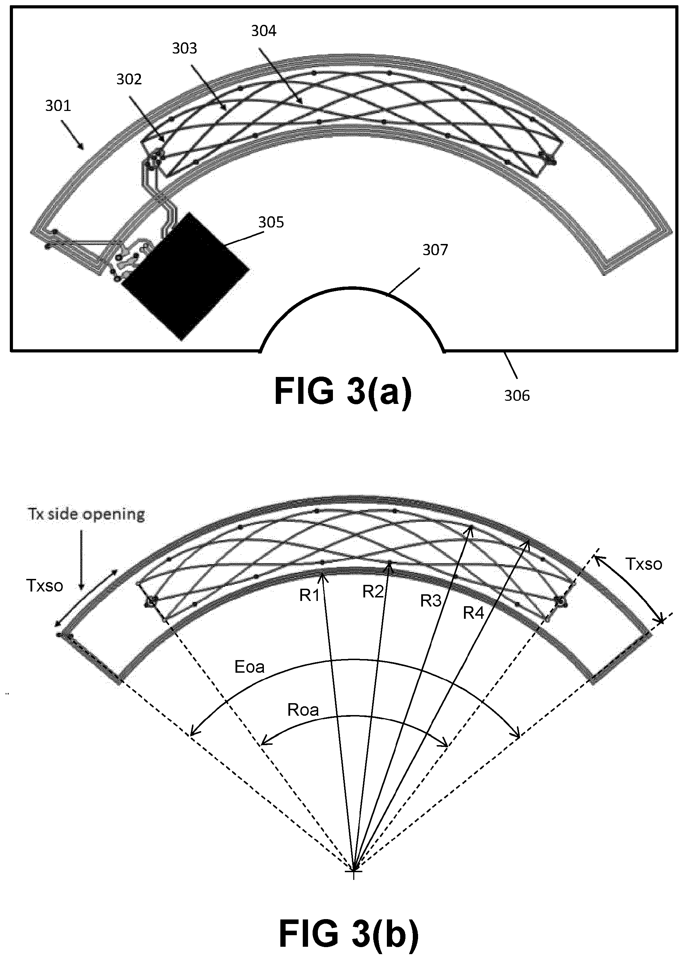

**FIG. 3(a)** shows an exemplary substrate comprising one or more transmitter coil(s) (in the example: three transmitter coils) and a plurality of receiver coils (in the example: three receiver coils, 120° phase shifted relative to one another), as can be used in embodiments of the present invention.

**FIG. 3(b)** shows the coils of FIG. 3(a) and parameters to describe the geometry of the coils.

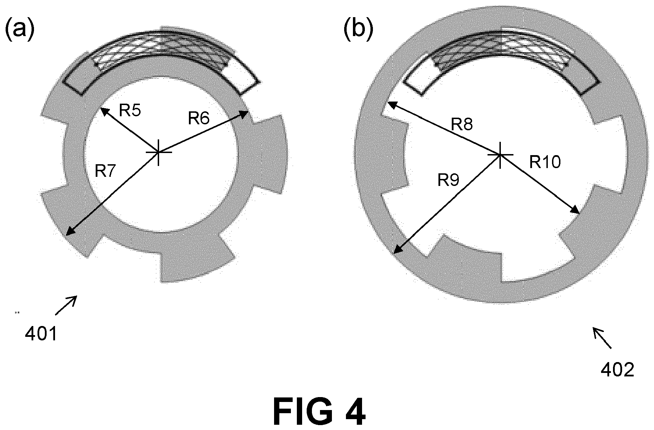

**FIG. 4(a) and FIG. 4(b)** show examples of target shapes and corresponding coils.

**FIG. 4(a)** shows a target having a shape comprising an annular portion and five radially outwardly directed lobes.

**FIG. 4(b)** shows a target having a shape with an annular portion and five radially inwardly directed lobes.

**FIG. 5(a) to FIG. 5(d)** illustrate several geometrical parameters of a C-shaped inductive angular sensor arrangement, used to describe the principles of the present invention.

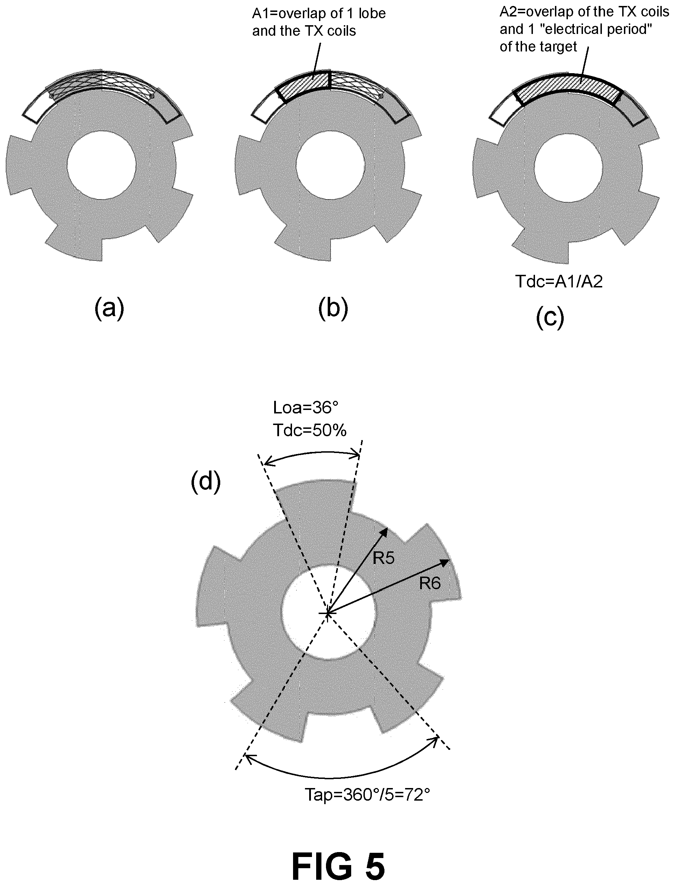

**FIG. 5(a)** shows a geometrical arrangement of a target and a coil system comprising one or more transmitter coils and a plurality of receiver coils.

**FIG. 5(b) an FIG. 5(c)** illustrate the term "target duty cycle".

**FIG. 5(d)** shows a target having five lobes, each lobe having a duty cycle of 50%, known in the art.

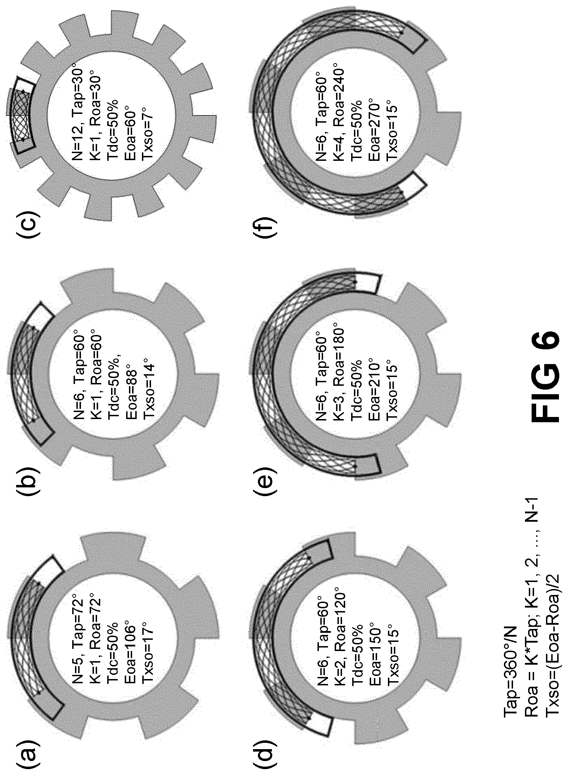

**FIG. 6(a) to FIG. 6(f)** show combinations of various targets and various coils as may be used in prior art C-shaped inductive angular sensor systems.

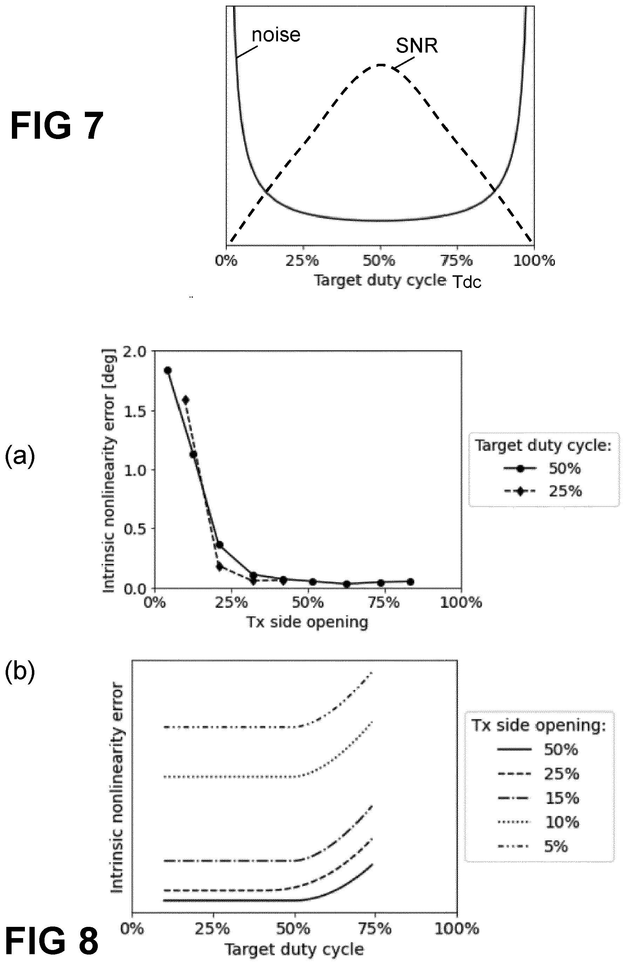

**FIG. 7** shows a graph illustrating (in arbitrary units) how the noise level (solid line), and its inverse, the signal-to-noise-ratio (SNR, dotted line) of the electrical signals typically vary with the target duty cycle. As can be seen, the maximum signal-to-noise, thus the minimum noise level, is obtained for a target duty cycle of 50%.

FIG. 8(a) shows the "intrinsic non-linearity" of a C-shape inductive angular position sensor arrangement like the one shown in FIG. 3(a), as a function of the transmitter coil side opening (Txso), for a target duty cycle (Tdc) of 50% (full line), and for a target duty cycle (Tdc) of 25% (dashed line).

FIG. 8(b) shows the "intrinsic non-linearity" of a C-shape inductive angular position sensor arrangement like the one shown in FIG. 3(a), as a function of the target duty cycle (Tdc), for various transmitter coil side openings (Txso) ranging from 5% to 50%.

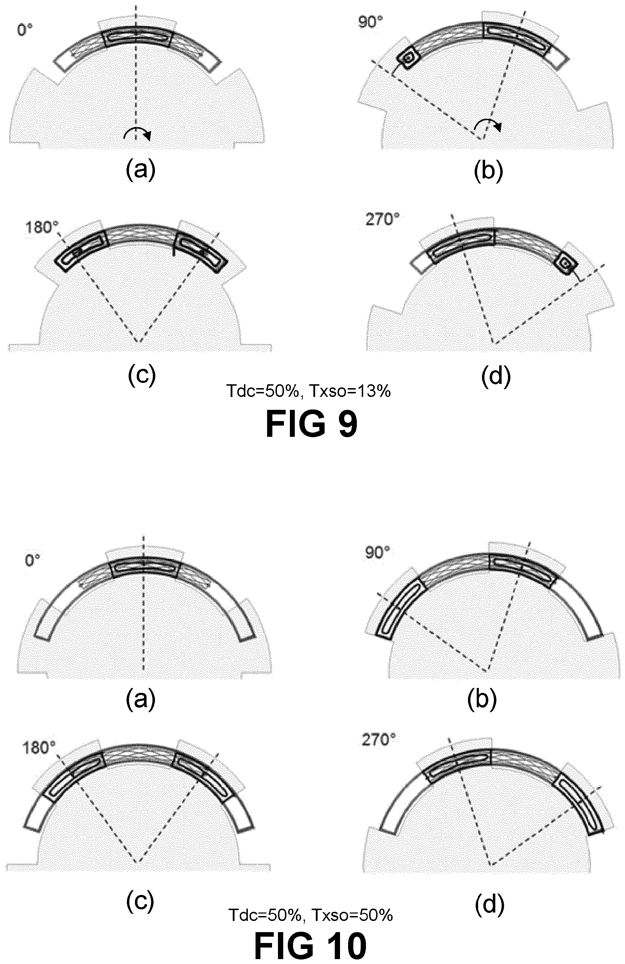

**FIG. 9(a) to FIG. 9(d)** show a C-shape inductive angular position sensor arrangement with a target duty cycle of 50% and a Tx side opening of 13%.

**FIG. 10(a) to FIG. 10(d)** show a C-shape inductive angular position sensor arrangement with a target duty cycle of 50% and a Tx side opening of 50%.

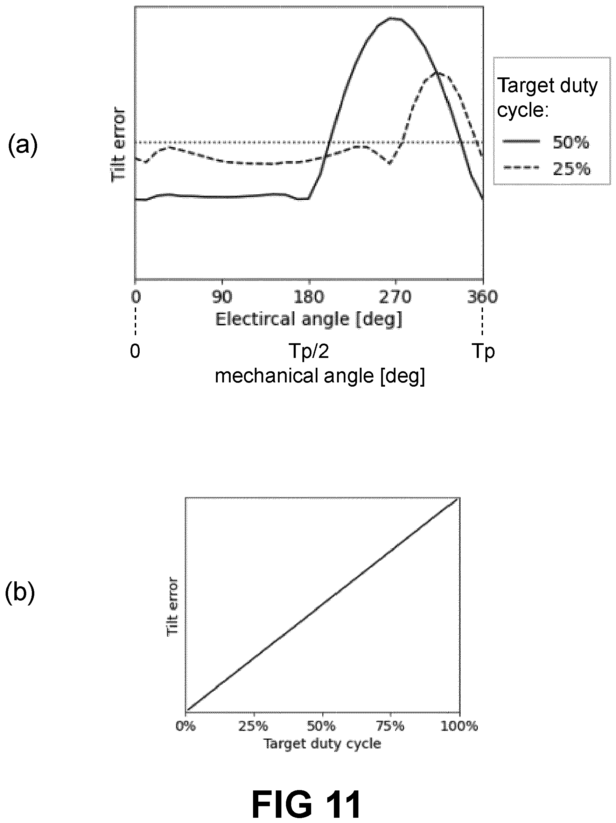

**FIG. 11(a) and FIG. 11(b)** show the influence of mechanical tilt (e.g. as shown in FIG. 2(b)).

**FIG. 11(a)** is a plot similar to FIG. 2(c), showing the influence of mechanical tilt for a target having a duty cycle of 50% (solid line) as is used in the prior art, and for a target with a duty cycle of 25% (dashed line) as proposed by the present invention. As can be seen, the maximum error for a target having a duty cycle of 25% is only about half of the mechanical error for a target having a duty cycle of 50%.

**FIG. 11(b)** shows that the error due to tilt varies substantially linearly with the target duty cycle.

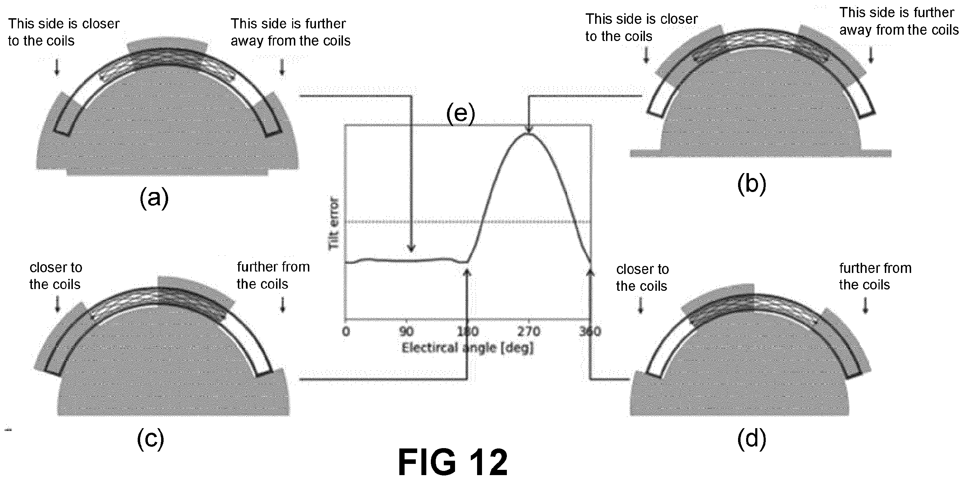

**FIG. 12(a) to FIG. 12(d)** may explain the behaviour of the solid line of FIG. 11(a).

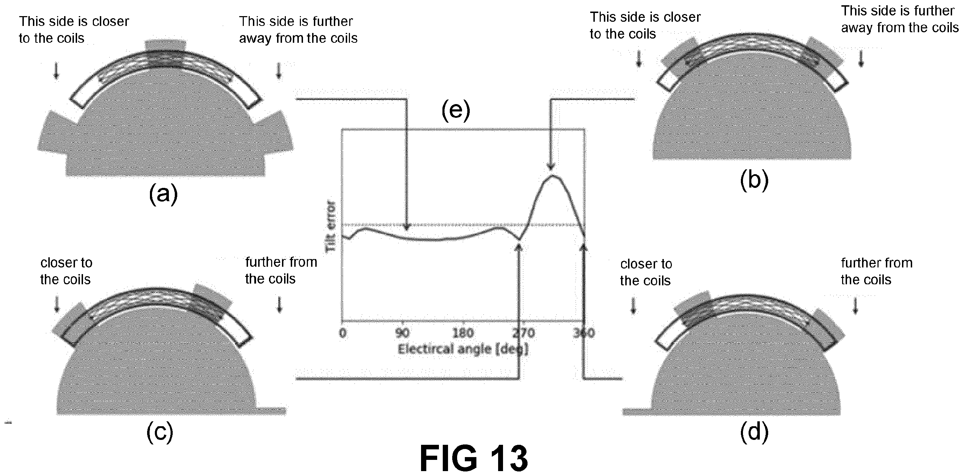

**FIG. 13(a) to FIG. 13(d)** may explain the behaviour of the dashed line of FIG. 11(a).

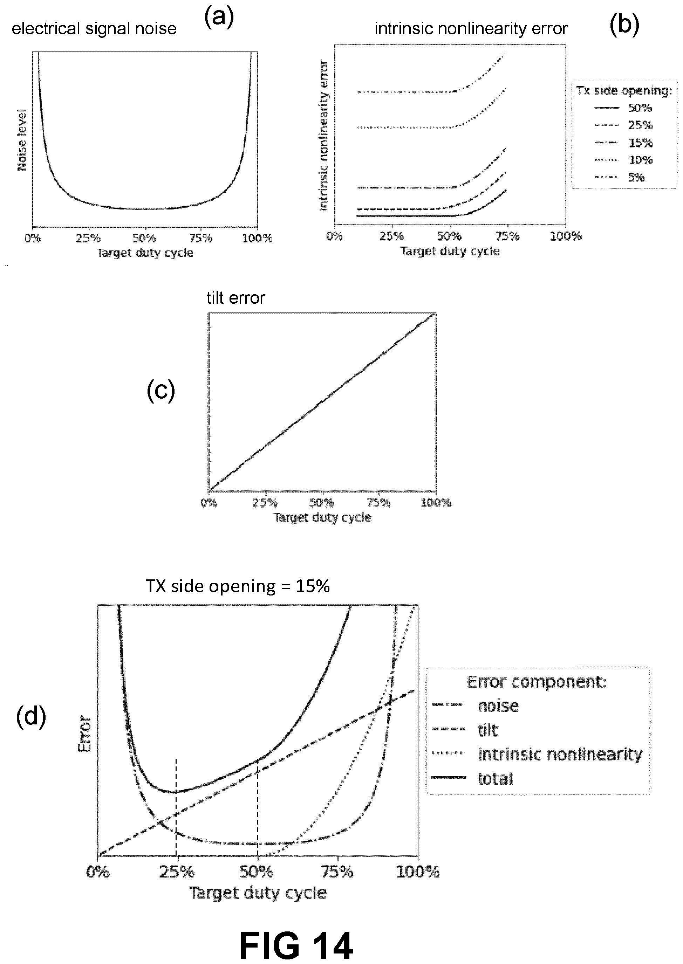

**FIG. 14(a) to FIG. 14(d)** show how the total angular error is composed of three error components.

**FIG. 14(a)** is a copy of FIG. 7 showing the error related to electrical noise;

**FIG. 14(b)** is a copy of FIG. 8(b) showing the intrinsic non-linearity error;

**FIG. 14(c)** is a copy of FIG. 11(b) showing the mechanical error related to tilt; and

**FIG. 14(d)** shows an example of the overall error of a typical C-shape inductive angular sensor being a combination of these error components, for a sensor arrangement having a Tx side opening (Txso) of 50%, for various target duty cycles (Tdc).

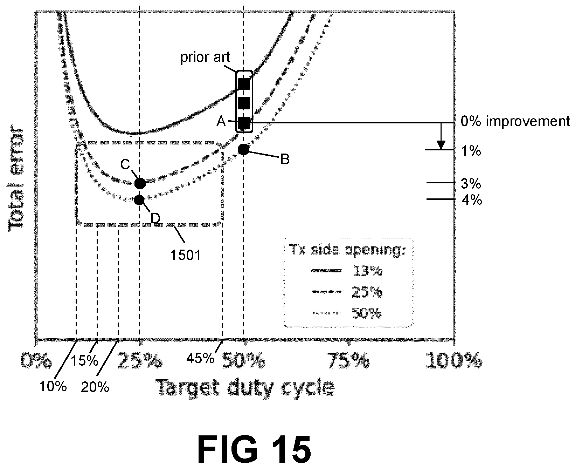

**FIG. 15** shows four exemplary total error curves, like the one shown in FIG. 14(d), for various C-shape inductive sensor arrangements having a Tx side opening (Txso) of 13% or 25% or 50%, and for various target duty cycles (Tdc). The rectangle with rounded corners shows preferred embodiments.

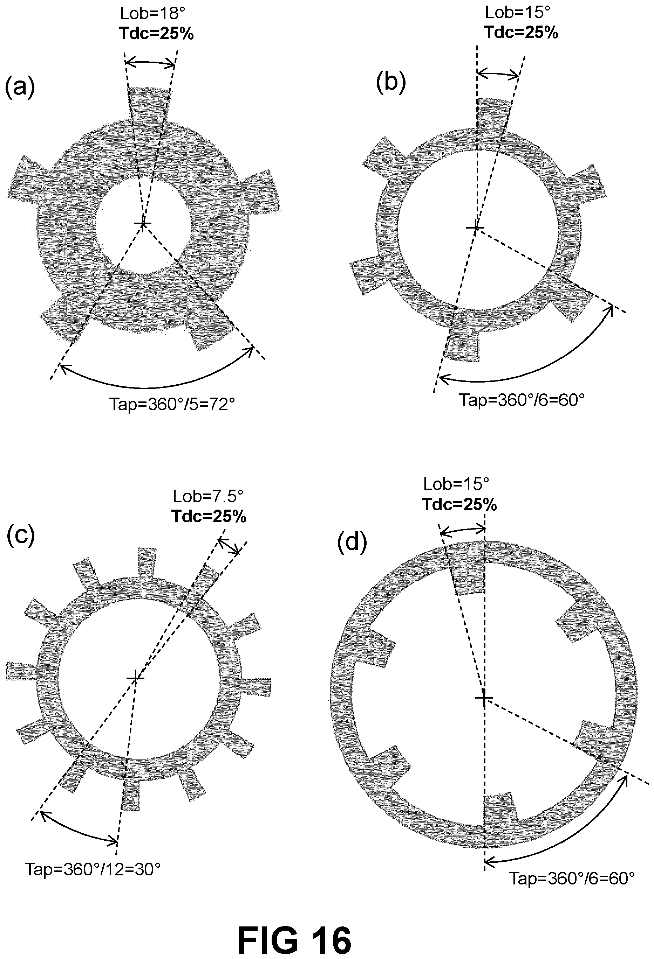

**FIG. 16** shows examples of targets having a duty cycle smaller than 50%, as can be used in embodiments of the present invention.

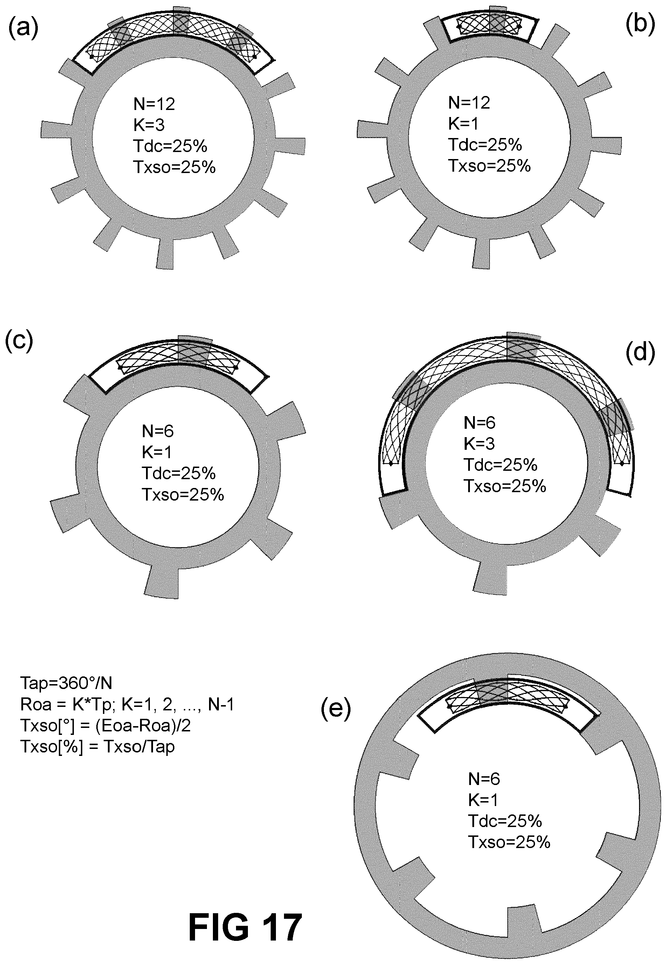

**FIG. 17** shows several combinations of targets and coils forming C-shaped inductive angular sensor arrangements according to embodiments of the present invention.

The drawings are only schematic and are non-limiting. In the drawings, the size of some of the elements may be exaggerated and not drawn on scale for illustrative purposes. Any reference signs in the claims shall not be construed as limiting the scope. In the different drawings, the same reference signs refer to the same or analogous elements.

## Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

In this document, the term "target" refers to a substantially planar object comprising an electrically conductive material or layer, such as e.g. a metal sheet, a printed circuit board with copper planes or tracks, etc. for allowing eddy currents to flow, when exposed to an AC electromagnetic field.

In this document, the term "transmitting coil(s)" or "transmitter coil(s)" or "excitation coil(s)" or "TX coil(s)" are used as synonyms.

In this document, the term "receiving coils" or "reception coils" or "detection coils" or "RX coils" are used as synonyms.

In this document, the term "Excitation Opening Angle", abbreviated herein as "Eoa", is defined as the "opening angle of the annular region defined by the excitation coil(s)", as illustrated in FIG. 3(b).

In this document, the term "Reception Opening Angle" or "Detection Opening Angle", abbreviated herein as "Roa", is defined as the "Opening Angle of the Receiving coil(s)", as illustrated in FIG. 3(b).

In this document, the term "Transmitter coil Side Opening", or "Tx side opening", abbreviated herein as "Txso" is defined as the difference between the Excitation Opening Angle (Eoa) and the Reception Opening Angle (Roa) divided by 2, thus Txso=(Eoa - Roa)/2.

In this document, the term "Target Duty Cycle", abbreviated herein as "Tdc" is defined as the ratio of a first area A1 and a second area A2, the first area A1 being defined by the overlap of a perpendicular projection of a single target lobe on the transmission coils (see e.g. FIG. 5(b)), the second area A2 being defined as the area of a portion of the transmission coil (s) over an angle corresponding to a single electrical period of the target (see e.g. FIG. 5(c)).

In this document, the expression "intrinsic non-linearity error" refers to the non-linearity error related to the geometry of the coils and the target, assuming perfect mechanical mounting (e.g. no tilt).

In this document, the term "Target angular periodicity", abbreviated herein as "Tap" is defined as 360° divided by the number (N) of lobes of the target. If the target is rotated over an integer times this angular periodicity Tap, the electrical signals provided by the receiver coils will (ideally) look exactly the same (apart from mechanical tolerances).

The present invention is related in general to C-shaped inductive angular position sensor arrangements and systems, and more specifically, is concerned with improving the accuracy of such a system. As already discussed in the background section, **FIG. 1(e)** shows an example of a motor assembly 126 comprising an electrical motor 124 and a C-shaped inductive sensor arrangement 120, comprising a metal target 121 having five lobes (only four of which are visible), and a printed circuit board (PCB) 122. The target 121 is mounted to the motor shaft 125. The PCB 122 is mounted to the motor chassis, and comprises the transmitter and receiver coils. As can be seen, the PCB 122 also contains an integrated circuit 123 operatively connected to the transmitter coil(s) for exciting the transmitter coils, and operatively connected to the receiver coils for receiving electrical signals from them. The integrated circuit may be an interface circuit for passing the signals to a processing circuit (not shown), or may contain said processing circuit. The processing circuit is configured for determining the angular position of the target relative to the printed circuit board, using known algorithms. For example, if the coils provide 120° phase shifted signals, the angle can be computed using the "Clarke transformation" to convert the three-phase signals into quadrature signals, on which an arctangent operation can be performed. If the coils provide 90° phase shifted signals, no Clarke transformation is required, and the angle can be determined using only an arctangent function.

The technical problem underlying the present invention may be best explained by means of FIG. 2(a) to FIG. 2(c).

**FIG. 2(a)** is a schematic representation of a C-shaped inductive angular position sensor arrangement 200, comprising a target 201 having a plurality of lobes (in the example: five lobes extending radially outwardly from an annular shape), and a coil arrangement 203 comprising one or more transmitter coils and two or more receiver coils. The coils are typically arranged (e.g. patterned) on a substrate, e.g. on a printed circuit board (PCB), not shown in FIG. 2. The PCB may be a two-layer PCB, or a four-layer PCB. A PCB having more than four layers is technically possible, but typically too expensive for the envisioned applications.

Ideally the target 201 on the one hand, and the substrate comprising the coils 203 on the other hand, are located in two virtual planes which are perfectly parallel to one another. The inventors discovered, however, that in practice there may be some mechanical tilt, for example as schematically illustrated in FIG. 2(b), typically in the order of about 1° or in the range from 0.1° to 2.0°, where 201 represents the target which is connected to the motor shaft, and 203 is the PCB with the coils. They found that a tilt results in an angular position error, for example as illustrated in **FIG. 2(c),** which shows an exemplary waveform illustrating a typical angular error as a function of the angular position of the target, over one electrical period, in case of mechanical tilt. The error value is shown in arbitrary units. While mechanical tilt may also occur in O-shaped inductive angular position sensor systems, it is less problematic, because the coil arrangement of an O-shaped inductive angular position sensor system spans an angular range of 360°, hence, if one lobe of the target is closer to the coils due to mechanical tilt, another lobe will usually be further away from the coils, the individual errors will be averaged, and the overall error is reduced.

The inventors had the task to improve the accuracy of the C-shaped inductive sensor arrangement in the presence of mechanical tilt, or stated in other words, to reduce the sensitivity of a C-shaped inductive sensor arrangement, for example as illustrated in FIG. 1(f) or FIG. 2(a), to mechanical tilt.

The inventors started experimenting. However, before describing the experiments, some terminology will be defined and illustrated by means of FIG. 3 to FIG. 7.

In embodiments of the present invention, the C-shaped angular sensor arrangement comprises a "target" and a "coil arrangement".

The target comprises electrically conductive material, such as a metal sheet or a substrate comprising one or more metal layers, for example a substrate with a metal coating, a printed circuit board (PCB) with copper tracks or patterned copper zones, etc. The target has a rotational symmetric shape with a number N of lobes or a number N of cut-outs, for example as shown in FIG. 4(a) illustrating a target having an annular shape with an inner radius R5 and outer radius R6, and having five lobes in the form of annular segments extending radially outwards with respect to said annular shape to an outer diameter R7 larger than R6; or for example as shown in **FIG. 4(b)** illustrating another target having an annular shape with an inner radius R8 and an outer radius R9 and having five lobes extending radially inwards with respect to the annular shape to an inner diameter R10 smaller than R8. One could also say that the target of FIG. 4(a) has an annular shape with inner radius R5 and outer radius R7 and five cut-outs in the form of annular segments on its outer periphery; and that the target of FIG. 4(b) has an annular shape with inner radius R10 and outer radius R9 and five cut-outs in the form of annular segments on its inner periphery.

The rotational symmetrical shape of the target defines an angular periodicity "Tap" equal to 360° divided by the number N of lobes, meaning that the shape appears the same after being rotated by an integer multiple of Tap. For example, the target of FIG. 5(d) has five lobes (N=5), which are angularly spaced equidistantly, hence the angular periodicity Tap=360°/N=72°. The reader not familiar with the expression "rotational symmetry" can find more information for example on the following website: https://en.wikipedia.org/wiki/Rotational_symmetry). In the examples of FIG. 1 to FIG. 4 the target also has five lobes, but the present invention is not limited thereto, and targets with less than five lobes or with more than five lobes can also be used, e.g. a target with four equidistant lobes (not shown); or a target with six equidistant lobes, see e.g. FIG. 16(b) or FIG. 16(d) or FIG. 17 (c) to FIG. 17(e); or a target with twelve equidistant lobes, see e.g. FIG. 16(c) or FIG. 17(a) or FIG. 17(b). In most drawings of the present application, the target has an annular ring shape with a plurality of lobes in the form of annular segments having substantially radially oriented edges, but the present invention is not limited thereto and will also work for other shapes. The main purpose of the target is to generate eddy currents to influence an electro-magnetic field transmitted by the one or more transmitter coils, as is known in the art.

As stated above, in embodiments of the present invention, the C-shaped angular sensor arrangement comprises a "target" and a "coil arrangement". The coil arrangement comprises one or more transmitter coils (in the example of FIG. 3, one transmitter coil 301 having three windings) and two or more receiving coils (in the example of FIG. 3: three receiver coils 302, 303, 304, 120° phase shifted relative to each other). The transmitter coil(s) and receiver coils are typically arranged on a substrate, for example on a two-layer or on a four-layer printed circuit board (PCB) having a suitable shape and size, for example as illustrated in FIG. 1(f) or FIG. 3(a), but of course, the present invention is not limited to these shapes. The shape and size of the substrate is not critical, and does not have a direct influence on the quality of the signal, in as far as it does not restrict the size and shape of the coils. The substrate may further accommodate other components, for example an integrated circuit 305, and may also have a cut-out for allowing passage of a shaft, and/or mounting holes and the like.

In embodiments of the present invention, the plurality of detection coils 302, 303, 304 may be arranged on a first imaginary annular segment defined by an inner radius R2 and an outer radius R3 and a first opening angle "Roa". The at least one excitation coil 301 may be arranged at the periphery of a second imaginary annular segment defined by an inner radius R1 smaller than R2, and an outer radius R4 larger than R3, and a second opening angle "Eoa", larger than the first opening angle "Roa", for example as illustrated in FIG. 3(b).

The first opening angle "Roa" is preferably an integer multiple of the target angular periodicity Tap, which can be expressed mathematically as:

$$Roa = K*Tap \qquad [1]$$

where K is an integer value from 1 to (N-1), and N is the number of lobes of the target. The first opening angle "Roa" is smaller than 360° for a C-shaped inductive angular sensor arrangement, e.g. smaller than 330°, or smaller than 270°, or smaller than 240° or smaller than 210° or smaller than 180°. Examples will be shown in FIG. 6 and FIG. 17.

Referring back to FIG. 3(b), in known systems, the inner radius R1 of the transmitter coil(s) is preferably slightly smaller than the inner radius R2 of the receiver coils, and the outer radius R4 of the transmitter coil(s) is preferably slightly larger than the outer radius R3 of the receiver coils, and the opening angle Eoa of the transmitter coil(s) is preferably slightly larger than the opening angle of the receiver coils Roa, but as far as is known to the inventors, this aspect is not well documented in the prior art.

The term "Tx side opening", abbreviated herein as Txso, is introduced to quantify the difference between the angular opening Eoa of the transmitter coil(s) and the angular opening Roa of the receiver coils. More specifically, the Tx side opening is defined as:

$$Txso = (Eoa - Roa)/2 \qquad [2]$$

As can be seen in FIG. 3(b), in preferred embodiments of the present invention, there is a Tx side opening at each ends of the coils, e.g. on the left side of FIG. 3(b) and on the right side of FIG. 3(b), and they are preferably equally large. It is noted that a C-shape inductive sensor arrangement where the two side openings (left and right) are not equal, will still work, but the asymmetry will typically degrade the linearity of the system.

FIG. 4(a) and FIG. 4(b) are already discussed above in the context of target with lobes extending radially inwards or outwards.

Targets of the present invention may have relatively wide lobes (see e.g. FIG. 5), or relatively narrow lobes (see e.g. FIG. 16 and FIG. 17). In order to quantify this, a term "Target Duty Cycle", abbreviated as "Tdc" is introduced, and is defined as the ratio (or percentage) of a first area A1 and a second area A2, the first area A1 being defined by the overlap of a perpendicular projection of a single target lobe on the transmission coils, e.g. as illustrated in FIG. 5(b), the second area A2 being defined as the area of a portion of the transmission coil(s) over a single electrical period of the target, e.g. as illustrated in FIG. 5(c).

While the above definition of "target duty cycle" is also applicable to targets having a more complex shape, for targets having lobes in the form of annular segments with radially oriented edges, e.g. as shown in FIG. 5(d), the "target duty cycle" Tdc can simply be determined or defined as the opening angle "Loa" of the lobe divided by the angular periodicity "Tap" of the target, thus Tdc=Loa/Tap. In the specific example of FIG. 5(d), the lobe opening angle Loa is 36°, the target period Tap is 72°, thus the target duty cycle is 36°/72°=50%.

FIG. 6(a) to FIG. 6(f) show combinations of various targets and various coil arrangements as could potentially be used in prior art C-shaped inductive angular sensor systems. As far as is known to the inventors, prior art C-shaped inductive sensors always have a target with a target duty cycle Tdc = 50%, and always have coils with a Tx side opening from about 10° to about 20°, irrespective of the number of lobes.

The target of FIG. 6(a) has five lobes (N=5), thus the target (electrical) period Tap = 360°/5=72°. The receiving coils span an angle of Roa=72°, which is equal to 1x the target period (thus K=1). The transmitter coil(s) span an angle Eoa of 106°, hence the transmitter side opening Txo=(Eoa-Roa)/2=17°.

The parameters for the sensor arrangement of FIG. 6(b) are: N=6, K=1, Tdc=50%, Txso=14°.

The parameters for the sensor arrangement of FIG. 6(c) are: N=12, K=1, Tdc=50%, Txso=7°.

The parameters for the sensor arrangement of FIG. 6(d) are: N=6, K=2, Tdc=50%, Txso=15°.

The parameters for the sensor arrangement of FIG. 6(e) are: N=6, K=3, Tdc=50%, Txso=15°.

The parameters for the sensor arrangement of FIG. 6(f) are: N=6, K=4, Tdc=50%, Txso=15°.

As shown, the parameters N and K and Txso can be chosen independently. In all examples of FIG. 6, the target duty cycle Tdc is 50%, and the Tx side opening Txso is smaller than 20°.

After having defined certain parameters of the C-shape inductive angular sensor arrangement in FIG. 3 to FIG. 6, the results of the experiments performed by the inventors, and the insights derived therefrom can now be described. The inventors decided to keep the reception coils and the detection algorithm unchanged, but focused on the geometrical parameters.

FIG. 7 shows a graph illustrating (in arbitrary units) how the noise level (solid line), e.g. thermal and environmental noise of the electrical signals obtained from the detection coils typically varies as a function of the "target duty cycle", Tdc. FIG. 7 also shows the inverse function, the signal-to-noise-ratio (SNR, dotted line). As can be seen, the target duty cycle Tdc has a direct impact on the noise level, which is inversely proportional to the signal strength.

While the inventors do not wish to be bound by any theory, the following reasoning may help to understand the curves of FIG. 7. The signal strength is determined by two main factors: the intensity of the eddy currents circulating in the target, and the contrast between the region with and without eddy currents. From these considerations it follows that the signal strength is maximum, i.e. the noise is minimum, when the target duty cycle is close to 50%. At lower duty cycles the narrowing of the lobes makes the target surface small. This implies weaker eddy currents because the smaller surface captures less excitation field from the Tx coil. For duty cycles higher than 50%, the intensity of the target eddy currents are increased, but contrast between the part with and the part without currents in the target is reduced, resulting in a loss of signal. In conclusion, due to the fact that the signal strength will be maximal for a target duty cycle of about 50%, the noise will be minimal.

This is probably the reason why all known C-shape angular sensors have a target duty cycle of 50%. For the same reason, it would be hard to imagine, and highly counter-intuitive to even try to improve the accuracy of the system by changing (e.g. increasing or decreasing) the target duty cycle. Yet, that is one of the parameters that the inventors of the present invention have investigated.

The inventors also experimented by varying the Tx side opening Txso of the coil arrangement. As mentioned above, in known C-shaped angular sensor systems, the Tx side opening Txso seems to be a value in the range from 10° to 20°, for no clear reason. The Tx side opening can also be expressed as a percentage of the target angular periodicity "Tap". In the examples of FIG. 6(a) to FIG. 6(f), the Txso is 17°/72°=19%, 14°/60°=23%, 7°/30°=23%, 15°/60°=25%, 15°/60°=25%, and 15°/60°=25%, respectively.

The inventors ran simulations, and discovered that the Tx side opening Txso has a major effect on the "intrinsic nonlinearity error".

FIG. 8(a) shows two curves, obtained by simulation, for the "intrinsic non-linearity error" of an inductive angular position sensor like the one shown in FIG. 3, as a function of the Tx side opening, one curve (full line) for a target duty cycle Tdc of 50%, and one curve (dashed line) for a target duty cycle Tdc of 25%. It can be seen that (i) the intrinsic nonlinearity error has an inverse relationship with respect to the Tx side opening (Txso), and that (ii) in case the Tx side opening is at least 15% or at least 20%, the intrinsic nonlinearity error decreases faster (or is smaller) for a target with a 25% duty cycle than for a target with a 50% duty cycle.

A first insight from these simulations is that, for a given target duty cycle, the "intrinsic non-linearity error" can be reduced by increasing the Tx side opening Txso to about 30%, or to about 40%, or to about 50%, or to about 60%.

While the inventors do not wish to be bound by any theory, the following reasoning may explain this behaviour for the example of a target having five lobes, and the coil system of FIG. 3(a), by looking at the current distribution in the target at some sample angles for two extreme cases.

FIG. 9(a) to FIG. 9(d) illustrate a C-shaped inductive angular sensor arrangement comprising a target having five lobes, each lobe having a duty cycle of 50%, and receiver coils spanning an angle (Roa) of 72°, the transmitter coil(s) having a Tx side opening Txso of 13%, which is quite low. As can be seen, for a wide range of angles (e.g. from about 90° electrical to about 270° electrical), there will be two target lobes overlapping the Tx coil. When this happens, one of the lobes or both of the lobes will generate eddy currents whose centroid is not aligned with the lobe axis. When one such sub-optimally excited lobe comes in close proximity to the Rx coils, see FIG. 9(b) and FIG. 9(d), or when both excited lobes overlap with the Rx coils as in FIG. 9(c), an angular error will be observed. Thus, when Txso is small, (e.g. 13%), the nonlinearity error is relatively large.

FIG. 10(a) to FIG. 10(d) illustrate a C-shaped inductive angular sensor arrangement comprising the same target having five lobes, each lobe having a duty cycle of 50%, and the same receiver coils spanning an angle of 72°, but with different transmitter coil(s) having a Tx side opening Txso of 50%, i.e. equal to the target duty cycle, which is quite high. As can be seen in this case, when two target lobes overlap the Tx coil, both lobes are excited correctly, i.e. the eddy currents span the whole lobe width and their centroid is aligned to the lobe axis. Thus, when Txso is relatively large, (e.g. 50%), the nonlinearity error is relatively low.

FIG. 8(b) shows the "intrinsic non-linearity error" of a C-shaped inductive angular position sensor like the one shown in FIG. 3, as a function of the target duty cycle Tdc, for various Tx side openings Txso ranging from 5% to 50%. These curves show largely the same information as FIG. 8(a), but presented differently to allow the combination of various errors (see further).

FIG. 9 and FIG. 10 are already discussed above, in conjunction with FIG. 8(a).

FIG. 11(a) and FIG. 11(b) show the influence of mechanical tilt. FIG. 11(a) is a plot similar to FIG. 2(c), showing the influence of mechanical tilt for a target with a duty cycle of 50% (solid line), and for a target with a duty cycle of 25% (dashed line), obtained by measurements. The inventors surprisingly found that the maximum error for a target having a duty cycle Tdc of 25% is only about half the maximum error for a target having a duty cycle of 50%. Based on these measurements, it can be understood that the error component caused by mechanical tilt varies substantially linearly with the target duty cycle, as illustrated in FIG. 11(b), and this error can be reduced by reducing the target duty cycle. While In practice, there is some variability on the actual mechanical tilt angle, a typical value of the mechanical tilt is in the range from about 0.1° to about 2°, for example equal to about 1°, and for that value of tilt, an optimal value of the target duty cycle Tdc was found to be about 25%.

FIG. 12(a) to FIG. 12(e) may explain the behaviour of the solid line of FIG. 11(a). While the inventors do not wish to be bound by any theory, the following reasoning may explain the mechanism causing the tilt error. FIG. 12(a) to FIG. 12(d) show four angular positions of the target. It is assumed that the target moves in clockwise direction, and that, due to mechanical tilt, e.g. as shown in FIG. 2(b), the target is closer to the coils on the left side of the drawings, and is further away from the coils on the right side of the drawings. Two angular ranges can be identified: a first region (from 0° to 180° in FIG. 12(e)) where the error is negative and almost constant (substantially independent of the angular position of the target), and a second range (from 180° to 360° in FIG. 12(e)) where the error shows a large bump. In the first range, only one target lobe overlaps the Rx coils. Due to the tilt, the eddy currents will be distorted, in particular the centroid of the eddy currents will move towards the side closer to the coils, i.e. to the left side of FIG. 12(a) to FIG. 12(d). This will result in the negative error seen in this first angular range. In the second range, on the other hand, two target lobes overlap the Rx coils. As a result, the Rx coils will be exposed to two field sources, one stronger than the other due to the tilt induced differences in the distance (or "airgap") between the lobes and the coils. This has a strong impact on the signals.

When using for example the coil system of FIG. 3(a), this can be understood as follows. Assume the target is at angular position 270° (electrical). Without tilt, this coil should generate a net zero signal because the signal contribution from the two lobes would be identical and opposite in sign. However, if one of the two lobes generates a stronger signal, the two signal components will not cancel out. A similar reasoning applies for the other coils. This is a reason of the error bump observed in the second range of FIG. 12(e). One can also understand that this error is maximum when the two lobes overlap at 50% with the Rx coils. For angles different from 270°, one lobe will dominate the signal, and the error will be reduced.

FIG. 13(a) to FIG. 13(e) may explain the behaviour of the dashed line of FIG. 11(a). **FIG. 13(a-e)** is a variant of FIG. 12(a-e) for a target having a duty cycle of 25%. It can be seen in FIG. 13(e) that the waveform again has two ranges: a first range where the error is relatively small and negative, and a second range showing a bump. It can further be seen that the maximum error of the waveform of FIG. 13(e) for a target with 25% duty cycle is smaller than the maximum error of the waveform of FIG. 12(e) for a target with 50% duty cycle, and that the second range is smaller, spanning only 90°.

While the inventors do not wish to be bound by any theory, this may be explained as follows: in a smaller lobe (25% duty cycle as compared to 50% duty cycle), a tilt will generate a smaller displacement of the eddy currents centroid, resulting in the lower error of the first range. The second range will span a lower angular segment too, and the error will be lower as compared to that of FIG. 12(e) because the overlap region is smaller.

**FIG. 14(d)** is a qualitative representation of the total error budget of a C-shaped angular sensor arrangement, as a function of the target duty cycle Tdc, for a Tx side opening of 15%. The total error budget is the combination of:

i) the noise, illustrated in FIG. 14(a), which is a copy of FIG. 7,
ii) the intrinsic non-linearity error, illustrated in FIG. 14(b), which is a copy of FIG. 8(b),
iii) the error related to tilt, illustrated in FIG. 14(c), which is a copy of FIG. 11(b),

It can be appreciated from this plot that the "optimum" target duty cycle for a given Tx side opening of 15%, is located in the vicinity of 25% (within a tolerance margin of e.g. ±10%), which came as a surprise, and could not have been predicted.

**FIG. 15** shows the total error of C-shaped inductive angular sensor arrangements such as the one shown in FIG. 2, as a function of the target duty cycle (Tdc) for several Tx side opening (Txso) values in a single graph. As described above, known arrangements (indicated with black squares) have a Tdc equal to 50%, and a Txso from about 10° to about 20°, or when expressed in percentage of Tap, from about 10% to about 30%.

As can be seen from these curves, for each given Tx side opening, the optimum configuration (minimum error) is located in the vicinity of Tdc=25% with a relatively large tolerance margin.

Experiments have shown the following accuracy improvements:

i) when starting from a particular prior art C-coil arrangement (e.g. square A), an improvement of about 1% was obtained by increasing the target side opening Txso from about 25% to about 50% while keeping the target duty cycle, i.e. when moving from point A to point B in FIG. 15;
ii) when starting from a particular prior art C-coil arrangement (e.g. square A), an improvement of about 3% was obtained by decreasing the target duty cycle from about 50% to about 25% while keeping the target side opening Txso, i.e. when moving from point A to point C in FIG. 15;
iii) when starting from a particular prior art C-coil arrangement (e.g. square A), an improvement of about 4% was obtained by decreasing the target duty cycle from about 50% to about 25% and by increasing the target side opening Txso from about 25% to about 50%, i.e. when moving from point A to point D in FIG. 15.

Of course, FIG. 15 was not available when he inventors started their experiments, but the skilled person having the benefit of the present disclosure can easily improve an existing C-shaped position sensor arrangement by varying one or both of the target duty cycle Tdc and the target coil side opening Txso. It is noted in this respect that the improvements related to increasing Txso are especially significant for Txso values in the range from about 15% to about 50%, in particular in the range from about 15% to 35% (consistent with FIG. 8a). As can be seen, improvements related to decreasing target duty cycle below 50% is valid for any Tx side opening.

It is noted that the skilled person does not need to implement both improvements (i.e. go to point D), but a very beneficial improvement is already achieved by modifying the target duty cycle alone (i.e. go to point C). Indeed, the Tx side opening typically has an impact on PCB size, which in turn has an impact on compactness and cost. The skilled person may therefore choose only a moderate value for the Tx side opening, based on compactness and/or cost constraints. Based on the present disclosure, it may even be possible to decrease the Tx side opening (e.g. from 50% to 25%), which may reduce the PCB-size, while maintaining the accuracy, by decreasing the target duty cycle.

The rectangle 1501 indicates preferred embodiments of the present invention.

**FIG. 16** shows several examples of a target having a target duty cycle Tdc of about 25%, for use in a C-shape inductive angular sensor arrangement according to embodiments of the present invention.

In **FIG. 16(a)** the target has five radially outwards directed lobes (N=5), thus the target angular periodicity Tap = 360°/5=72°. The lobe has an opening angle of 18°, hence the target duty cycle is 18°/72° = 25%.

In **FIG. 16(b),** the target has six radially outwards directed lobes (N=6), the target angular periodicity Tap is 360°/6=60°, the lobe opening angle Loa is 15°, and the target duty cycle Tdc is 15°/60°=25%.

The target shown in **FIG. 16(c)** has twelve radially outwards directed lobes (N=12), the target angular periodicity Tap is 360°/12=30°, the lobe opening angle Loa is 7.5°, and the target duty cycle Tdc is 7.5°/30°=25%.

The target shown in **FIG. 16(d)** has six radially inwards directed lobes (N=6), the target angular periodicity Tap is 360°/6=60°, the lobe opening angle Loa is 15°, and the target duty cycle Tdc is 15°/60°=25%.

But as described above, the present invention is not limited to targets having a duty cycle of exactly 25%, and other duty cycles in the range from 10% to 45% may also be used, e.g. equal to about 15%, or about 20%, or about 25%, or about 30%, or about 35%, or about 40%, or about 45%, or values therebetween.

FIG. 17 (a) to (e) shows several examples of C-shaped inductive angular sensor arrangements proposed by the present invention, using the targets of FIG. 16(a) to FIG. 16(e) respectively. The geometrical parameters of the target and the coils are specified in the following tables:

| parameters of **FIG. 17(a)** | in a variant: |
| --- | --- |
| N=12, Tap=360°/12=30°<br>K=3, Roa=K*Tap=90°<br>Loa=7.5°, Tdc=Loa/Tap=7.5°/30°=25%<br>Txso=(105°-90°)/2=7.5°=Tap*25%<br>Eoa=105° | N=12, Tap=30°<br>K=1 to 11, Roa=K*Tap<br>Tdc = 10 to 45%, or 15 to 40%, or 20 to 35%, or 20% to 30%<br>Txso=25 to 75% of Tap, or 25 to 50% of Tap<br>Eoa=Roa+2*Txso |

| parameters of **FIG. 17(b)** | in a variant: |
| --- | --- |
| N=12, Tap=360°/12=30°<br>K=1, Roa=K*Tap=30°<br>Loa=7.5°, Tdc=Loa/Tap=7.5°/30°= 25%<br>Txso=(45°-30°)/2=7.5°=Tap*25%<br>Eoa=45° | N=12, Tap=30°<br>K=1 to 11, Roa=K*Tap<br>Tdc = 10 to 45%, or 15 to 40%, or 20 to 35%, or 20% to 30%<br>Txso=25 to 75% of Tap, or 25 to 50% of Tap<br>Eoa=Roa+2*Txso |

| parameters of FIG. **17(c)** | in a variant: |
| --- | --- |
| N=6, Tap=360°/6=60°<br>K=1, Roa=K*Tap=60°<br>Loa=15°, Tdc=Loa/Tap=15°/60°=25%<br>Txso=(88°-60°)/2=14°=Tap*23%<br>Eoa=88° | N=6, Tap=60°<br>K=1 to 5, Roa=K*Tap<br>Tdc = 10 to 45%, or 15 to 40%, or 20 to 35%, or 20% to 30%<br>Txso=25 to 75% of Tap, or 25 to 50% of Tap<br>Eoa=Roa+2*Txso |

| parameters of **FIG. 17(d)** | in a variant: |
|---|---|
| N=6, Tap=360°/6=60°<br>K=3, Roa=K*Tap=180°<br>Loa=15°, Tdc=Loa/Tap=15°/60°=25%<br>Txso=(210°-180°)/2=15°=Tap*25%<br>Eoa=210° | N=6, Tap=60°<br>K=1 to 5, Roa=K*Tap<br>Tdc = 10 to 45%, or 15 to 40%, or 20 to 35%, or 20% to 30%<br>Txso=25 to 75% of Tap, or 25 to 50% of Tap<br>Eoa=Roa+2*Txso |

| parameters of **FIG. 17(e)** | in a variant: |
|---|---|
| N=6, Tap=360°/6=60°<br>K=1, Roa=K*Tap=60°<br>Loa=15°, Tdc=Loa/Tap=15°/60°=25%<br>Txso=(90°-60°)/2=15°=Tap*25%<br>Eoa=90° | N=6, Tap=60°<br>K=1 to 5, Roa=K*Tap<br>Tdc = 10 to 45%, or 15 to 40%, or 20 to 35%, or 20% to 30%<br>Txso=25 to 75% of Tap, or 25 to 50% of Tap<br>Eoa=Roa+2*Txso |

but of course, the present invention is not limited to these specific examples, but only by the claims. That said, the following table lists various specific combinations of embodiments envisioned by the present invention, specified by the parameters N, K, Tdc and Txso. The values of N and K are integer values, the values of Tdc and Txso can be expressed as percentages. The values in the third and fourth column are approximate percentage values with a tolerance margin of +/-3%.

| N | K | Tdc about | Txso about |
|---|---|---|---|
| 3 | 1 | 10% | 25% or 30% or 35% or 40% or 45% or 50% or 55% or 60% or 65% or 75% |
| 3 | 1 | 15% | 25% or 30% or 35% or 40% or 45% or 50% or 55% or 60% or 65% or 75% |
| 3 | 1 | 20% | 25% or 30% or 35% or 40% or 45% or 50% or 55% or 60% or 65% or 75% |
| 3 | 1 | 25% | 25% or 30% or 35% or 40% or 45% or 50% or 55% or 60% or 65% or 75% |
| 3 | 1 | 30% | 25% or 30% or 35% or 40% or 45% or 50% or 55% or 60% or 65% or 75% |
| 3 | 1 | 35% | 25% or 30% or 35% or 40% or 45% or 50% or 55% or 60% or 65% or 75% |
| 3 | 1 | 40% | 25% or 30% or 35% or 40% or 45% or 50% or 55% or 60% or 65% or 75% |
| 3 | 1 | 45% | 25% or 30% or 35% or 40% or 45% or 50% or 55% or 60% or 65% or 75% |
| | | | |
| 3 | 2 | 10% | 25% or 30% or 35% or 40% or 45% or 50% |
| 3 | 2 | 15% | 25% or 30% or 35% or 40% or 45% or 50% |
| 3 | 2 | 20% | 25% or 30% or 35% or 40% or 45% or 50% |
| 3 | 2 | 25% | 25% or 30% or 35% or 40% or 45% or 50% |
| 3 | 2 | 30% | 25% or 30% or 35% or 40% or 45% or 50% |
| 3 | 2 | 35% | 25% or 30% or 35% or 40% or 45% or 50% |
| 3 | 2 | 40% | 25% or 30% or 35% or 40% or 45% or 50% |
| 3 | 2 | 45% | 25% or 30% or 35% or 40% or 45% or 50% |
| | | | |
| 4 | 1 | 10% | 25% or 30% or 35% or 40% or 45% or 50% or 55% or 60% or 65% or 75% |
| 4 | 1 | 15% | 25% or 30% or 35% or 40% or 45% or 50% or 55% or 60% or 65% or 75% |
| 4 | 1 | 20% | 25% or 30% or 35% or 40% or 45% or 50% or 55% or 60% or 65% or 75% |

(continued)

| N | K | Tdc about | Txso about |
|---|---|---|---|
| 4 | 1 | 25% | 25% or 30% or 35% or 40% or 45% or 50% or 55% or 60% or 65% or 75% |
| 4 | 1 | 30% | 25% or 30% or 35% or 40% or 45% or 50% or 55% or 60% or 65% or 75% |
| 4 | 1 | 35% | 25% or 30% or 35% or 40% or 45% or 50% or 55% or 60% or 65% or 75% |
| 4 | 1 | 40% | 25% or 30% or 35% or 40% or 45% or 50% or 55% or 60% or 65% or 75% |
| 4 | 1 | 45% | 25% or 30% or 35% or 40% or 45% or 50% or 55% or 60% or 65% or 75% |
| | | | |
| 4 | 2 | 10% | 25% or 30% or 35% or 40% or 45% or 50% or 55% or 60% or 65% or 75% |
| 4 | 2 | 15% | 25% or 30% or 35% or 40% or 45% or 50% or 55% or 60% or 65% or 75% |
| 4 | 2 | 20% | 25% or 30% or 35% or 40% or 45% or 50% or 55% or 60% or 65% or 75% |
| 4 | 2 | 25% | 25% or 30% or 35% or 40% or 45% or 50% or 55% or 60% or 65% or 75% |
| 4 | 2 | 30% | 25% or 30% or 35% or 40% or 45% or 50% or 55% or 60% or 65% or 75% |
| 4 | 2 | 35% | 25% or 30% or 35% or 40% or 45% or 50% or 55% or 60% or 65% or 75% |
| 4 | 2 | 40% | 25% or 30% or 35% or 40% or 45% or 50% or 55% or 60% or 65% or 75% |
| 4 | 2 | 45% | 25% or 30% or 35% or 40% or 45% or 50% or 55% or 60% or 65% or 75% |
| | | | |
| 4 | 3 | 10% | 25% or 30% or 35% or 40% or 45% or 50% |
| 4 | 3 | 15% | 25% or 30% or 35% or 40% or 45% or 50% |
| 4 | 3 | 20% | 25% or 30% or 35% or 40% or 45% or 50% |
| 4 | 3 | 25% | 25% or 30% or 35% or 40% or 45% or 50% |
| 4 | 3 | 30% | 25% or 30% or 35% or 40% or 45% or 50% |
| 4 | 3 | 35% | 25% or 30% or 35% or 40% or 45% or 50% |
| 4 | 3 | 40% | 25% or 30% or 35% or 40% or 45% or 50% |
| 4 | 3 | 45% | 25% or 30% or 35% or 40% or 45% or 50% |
| | | | |
| 5 | 1 | 10% | 25% or 30% or 35% or 40% or 45% or 50% or 55% or 60% or 65% or 75% |
| 5 | 1 | 15% | 25% or 30% or 35% or 40% or 45% or 50% or 55% or 60% or 65% or 75% |
| 5 | 1 | 20% | 25% or 30% or 35% or 40% or 45% or 50% or 55% or 60% or 65% or 75% |
| 5 | 1 | 25% | 25% or 30% or 35% or 40% or 45% or 50% or 55% or 60% or 65% or 75% |
| 5 | 1 | 30% | 25% or 30% or 35% or 40% or 45% or 50% or 55% or 60% or 65% or 75% |
| 5 | 1 | 35% | 25% or 30% or 35% or 40% or 45% or 50% or 55% or 60% or 65% or 75% |
| 5 | 1 | 40% | 25% or 30% or 35% or 40% or 45% or 50% or 55% or 60% or 65% or 75% |
| 5 | 1 | 45% | 25% or 30% or 35% or 40% or 45% or 50% or 55% or 60% or 65% or 75% |
| | | | |
| 5 | 2 | 10% | 25% or 30% or 35% or 40% or 45% or 50% or 55% or 60% or 65% or 75% |
| 5 | 2 | 15% | 25% or 30% or 35% or 40% or 45% or 50% or 55% or 60% or 65% or 75% |
| 5 | 2 | 20% | 25% or 30% or 35% or 40% or 45% or 50% or 55% or 60% or 65% or 75% |
| 5 | 2 | 25% | 25% or 30% or 35% or 40% or 45% or 50% or 55% or 60% or 65% or 75% |
| 5 | 2 | 30% | 25% or 30% or 35% or 40% or 45% or 50% or 55% or 60% or 65% or 75% |

(continued)

| N | K | Tdc about | Txso about |
|---|---|---|---|
| 5 | 2 | 35% | 25% or 30% or 35% or 40% or 45% or 50% or 55% or 60% or 65% or 75% |
| 5 | 2 | 40% | 25% or 30% or 35% or 40% or 45% or 50% or 55% or 60% or 65% or 75% |
| 5 | 2 | 45% | 25% or 30% or 35% or 40% or 45% or 50% or 55% or 60% or 65% or 75% |
|   |   |   |   |
| 5 | 3 | 10% | 25% or 30% or 35% or 40% or 45% or 50% or 55% or 60% or 65% or 75% |
| 5 | 3 | 15% | 25% or 30% or 35% or 40% or 45% or 50% or 55% or 60% or 65% or 75% |
| 5 | 3 | 20% | 25% or 30% or 35% or 40% or 45% or 50% or 55% or 60% or 65% or 75% |
| 5 | 3 | 25% | 25% or 30% or 35% or 40% or 45% or 50% or 55% or 60% or 65% or 75% |
| 5 | 3 | 30% | 25% or 30% or 35% or 40% or 45% or 50% or 55% or 60% or 65% or 75% |
| 5 | 3 | 35% | 25% or 30% or 35% or 40% or 45% or 50% or 55% or 60% or 65% or 75% |
| 5 | 3 | 40% | 25% or 30% or 35% or 40% or 45% or 50% or 55% or 60% or 65% or 75% |
| 5 | 3 | 45% | 25% or 30% or 35% or 40% or 45% or 50% or 55% or 60% or 65% or 75% |
|   |   |   |   |
| 5 | 4 | 10% | 25% or 30% or 35% or 40% or 45% or 50% |
| 5 | 4 | 15% | 25% or 30% or 35% or 40% or 45% or 50% |
| 5 | 4 | 20% | 25% or 30% or 35% or 40% or 45% or 50% |
| 5 | 4 | 25% | 25% or 30% or 35% or 40% or 45% or 50% |
| 5 | 4 | 30% | 25% or 30% or 35% or 40% or 45% or 50% |
| 5 | 4 | 35% | 25% or 30% or 35% or 40% or 45% or 50% |
| 5 | 4 | 40% | 25% or 30% or 35% or 40% or 45% or 50% |
| 5 | 4 | 45% | 25% or 30% or 35% or 40% or 45% or 50% |
|   |   |   |   |
| 6 | 1 | 10% | 25% or 30% or 35% or 40% or 45% or 50% or 55% or 60% or 65% or 75% |
| 6 | 1 | 15% | 25% or 30% or 35% or 40% or 45% or 50% or 55% or 60% or 65% or 75% |
| 6 | 1 | 20% | 25% or 30% or 35% or 40% or 45% or 50% or 55% or 60% or 65% or 75% |
| 6 | 1 | 25% | 25% or 30% or 35% or 40% or 45% or 50% or 55% or 60% or 65% or 75% |
| 6 | 1 | 30% | 25% or 30% or 35% or 40% or 45% or 50% or 55% or 60% or 65% or 75% |
| 6 | 1 | 35% | 25% or 30% or 35% or 40% or 45% or 50% or 55% or 60% or 65% or 75% |
| 6 | 1 | 40% | 25% or 30% or 35% or 40% or 45% or 50% or 55% or 60% or 65% or 75% |
| 6 | 1 | 45% | 25% or 30% or 35% or 40% or 45% or 50% or 55% or 60% or 65% or 75% |
|   |   |   |   |
| 6 | 2 | 10% | 25% or 30% or 35% or 40% or 45% or 50% or 55% or 60% or 65% or 75% |
| 6 | 2 | 15% | 25% or 30% or 35% or 40% or 45% or 50% or 55% or 60% or 65% or 75% |
| 6 | 2 | 20% | 25% or 30% or 35% or 40% or 45% or 50% or 55% or 60% or 65% or 75% |
| 6 | 2 | 25% | 25% or 30% or 35% or 40% or 45% or 50% or 55% or 60% or 65% or 75% |
| 6 | 2 | 30% | 25% or 30% or 35% or 40% or 45% or 50% or 55% or 60% or 65% or 75% |
| 6 | 2 | 35% | 25% or 30% or 35% or 40% or 45% or 50% or 55% or 60% or 65% or 75% |
| 6 | 2 | 40% | 25% or 30% or 35% or 40% or 45% or 50% or 55% or 60% or 65% or 75% |

(continued)

| N | K | Tdc about | Txso about |
|---|---|---|---|
| 6 | 2 | 45% | 25% or 30% or 35% or 40% or 45% or 50% or 55% or 60% or 65% or 75% |
| | | | |
| 6 | 3 | 10% | 25% or 30% or 35% or 40% or 45% or 50% or 55% or 60% or 65% or 75% |
| 6 | 3 | 15% | 25% or 30% or 35% or 40% or 45% or 50% or 55% or 60% or 65% or 75% |
| 6 | 3 | 20% | 25% or 30% or 35% or 40% or 45% or 50% or 55% or 60% or 65% or 75% |
| 6 | 3 | 25% | 25% or 30% or 35% or 40% or 45% or 50% or 55% or 60% or 65% or 75% |
| 6 | 3 | 30% | 25% or 30% or 35% or 40% or 45% or 50% or 55% or 60% or 65% or 75% |
| 6 | 3 | 35% | 25% or 30% or 35% or 40% or 45% or 50% or 55% or 60% or 65% or 75% |
| 6 | 3 | 40% | 25% or 30% or 35% or 40% or 45% or 50% or 55% or 60% or 65% or 75% |
| 6 | 3 | 45% | 25% or 30% or 35% or 40% or 45% or 50% or 55% or 60% or 65% or 75% |
| | | | |
| 6 | 4 | 10% | 25% or 30% or 35% or 40% or 45% or 50% or 55% or 60% or 65% or 75% |
| 6 | 4 | 15% | 25% or 30% or 35% or 40% or 45% or 50% or 55% or 60% or 65% or 75% |
| 6 | 4 | 20% | 25% or 30% or 35% or 40% or 45% or 50% or 55% or 60% or 65% or 75% |
| 6 | 4 | 25% | 25% or 30% or 35% or 40% or 45% or 50% or 55% or 60% or 65% or 75% |
| 6 | 4 | 30% | 25% or 30% or 35% or 40% or 45% or 50% or 55% or 60% or 65% or 75% |
| 6 | 4 | 35% | 25% or 30% or 35% or 40% or 45% or 50% or 55% or 60% or 65% or 75% |
| 6 | 4 | 40% | 25% or 30% or 35% or 40% or 45% or 50% or 55% or 60% or 65% or 75% |
| 6 | 4 | 45% | 25% or 30% or 35% or 40% or 45% or 50% or 55% or 60% or 65% or 75% |
| | | | |
| 6 | 5 | 10% | 25% or 30% or 35% or 40% or 45% or 50% |
| 6 | 5 | 15% | 25% or 30% or 35% or 40% or 45% or 50% |
| 6 | 5 | 20% | 25% or 30% or 35% or 40% or 45% or 50% |
| 6 | 5 | 25% | 25% or 30% or 35% or 40% or 45% or 50% |
| 6 | 5 | 30% | 25% or 30% or 35% or 40% or 45% or 50% |
| 6 | 5 | 35% | 25% or 30% or 35% or 40% or 45% or 50% |
| 6 | 5 | 40% | 25% or 30% or 35% or 40% or 45% or 50% |
| 6 | 5 | 45% | 25% or 30% or 35% or 40% or 45% or 50% |
| | | | |
| 8 | 1 | 10% | 25% or 30% or 35% or 40% or 45% or 50% or 55% or 60% or 65% or 75% |
| 8 | 1 | 15% | 25% or 30% or 35% or 40% or 45% or 50% or 55% or 60% or 65% or 75% |
| 8 | 1 | 20% | 25% or 30% or 35% or 40% or 45% or 50% or 55% or 60% or 65% or 75% |
| 8 | 1 | 25% | 25% or 30% or 35% or 40% or 45% or 50% or 55% or 60% or 65% or 75% |
| 8 | 1 | 30% | 25% or 30% or 35% or 40% or 45% or 50% or 55% or 60% or 65% or 75% |
| 8 | 1 | 35% | 25% or 30% or 35% or 40% or 45% or 50% or 55% or 60% or 65% or 75% |
| 8 | 1 | 40% | 25% or 30% or 35% or 40% or 45% or 50% or 55% or 60% or 65% or 75% |
| 8 | 1 | 45% | 25% or 30% or 35% or 40% or 45% or 50% or 55% or 60% or 65% or 75% |
| | | | |

(continued)

| N | K | Tdc about | Txso about |
|---|---|-----------|-----------|
| 8 | 2 | 10% | 25% or 30% or 35% or 40% or 45% or 50% or 55% or 60% or 65% or 75% |
| 8 | 2 | 15% | 25% or 30% or 35% or 40% or 45% or 50% or 55% or 60% or 65% or 75% |
| 8 | 2 | 20% | 25% or 30% or 35% or 40% or 45% or 50% or 55% or 60% or 65% or 75% |
| 8 | 2 | 25% | 25% or 30% or 35% or 40% or 45% or 50% or 55% or 60% or 65% or 75% |
| 8 | 2 | 30% | 25% or 30% or 35% or 40% or 45% or 50% or 55% or 60% or 65% or 75% |
| 8 | 2 | 35% | 25% or 30% or 35% or 40% or 45% or 50% or 55% or 60% or 65% or 75% |
| 8 | 2 | 40% | 25% or 30% or 35% or 40% or 45% or 50% or 55% or 60% or 65% or 75% |
| 8 | 2 | 45% | 25% or 30% or 35% or 40% or 45% or 50% or 55% or 60% or 65% or 75% |
| | | | |
| 8 | 3 | 10% | 25% or 30% or 35% or 40% or 45% or 50% or 55% or 60% or 65% or 75% |
| 8 | 3 | 15% | 25% or 30% or 35% or 40% or 45% or 50% or 55% or 60% or 65% or 75% |
| 8 | 3 | 20% | 25% or 30% or 35% or 40% or 45% or 50% or 55% or 60% or 65% or 75% |
| 8 | 3 | 25% | 25% or 30% or 35% or 40% or 45% or 50% or 55% or 60% or 65% or 75% |
| 8 | 3 | 30% | 25% or 30% or 35% or 40% or 45% or 50% or 55% or 60% or 65% or 75% |
| 8 | 3 | 35% | 25% or 30% or 35% or 40% or 45% or 50% or 55% or 60% or 65% or 75% |
| 8 | 3 | 40% | 25% or 30% or 35% or 40% or 45% or 50% or 55% or 60% or 65% or 75% |
| 8 | 3 | 45% | 25% or 30% or 35% or 40% or 45% or 50% or 55% or 60% or 65% or 75% |
| | | | |
| 8 | 4 | 10% | 25% or 30% or 35% or 40% or 45% or 50% or 55% or 60% or 65% or 75% |
| 8 | 4 | 15% | 25% or 30% or 35% or 40% or 45% or 50% or 55% or 60% or 65% or 75% |
| 8 | 4 | 20% | 25% or 30% or 35% or 40% or 45% or 50% or 55% or 60% or 65% or 75% |
| 8 | 4 | 25% | 25% or 30% or 35% or 40% or 45% or 50% or 55% or 60% or 65% or 75% |
| 8 | 4 | 30% | 25% or 30% or 35% or 40% or 45% or 50% or 55% or 60% or 65% or 75% |
| 8 | 4 | 35% | 25% or 30% or 35% or 40% or 45% or 50% or 55% or 60% or 65% or 75% |
| 8 | 4 | 40% | 25% or 30% or 35% or 40% or 45% or 50% or 55% or 60% or 65% or 75% |
| 8 | 4 | 45% | 25% or 30% or 35% or 40% or 45% or 50% or 55% or 60% or 65% or 75% |
| | | | |
| 8 | 5 | 10% | 25% or 30% or 35% or 40% or 45% or 50% or 55% or 60% or 65% or 75% |
| 8 | 5 | 15% | 25% or 30% or 35% or 40% or 45% or 50% or 55% or 60% or 65% or 75% |
| 8 | 5 | 20% | 25% or 30% or 35% or 40% or 45% or 50% or 55% or 60% or 65% or 75% |
| 8 | 5 | 25% | 25% or 30% or 35% or 40% or 45% or 50% or 55% or 60% or 65% or 75% |
| 8 | 5 | 30% | 25% or 30% or 35% or 40% or 45% or 50% or 55% or 60% or 65% or 75% |
| 8 | 5 | 35% | 25% or 30% or 35% or 40% or 45% or 50% or 55% or 60% or 65% or 75% |
| 8 | 5 | 40% | 25% or 30% or 35% or 40% or 45% or 50% or 55% or 60% or 65% or 75% |
| 8 | 5 | 45% | 25% or 30% or 35% or 40% or 45% or 50% or 55% or 60% or 65% or 75% |
| | | | |
| 8 | 6 | 10% | 25% or 30% or 35% or 40% or 45% or 50% or 55% or 60% or 65% or 75% |
| 8 | 6 | 15% | 25% or 30% or 35% or 40% or 45% or 50% or 55% or 60% or 65% or 75% |

(continued)

| N | K | Tdc about | Txso about |
|---|---|---|---|
| 8 | 6 | 20% | 25% or 30% or 35% or 40% or 45% or 50% or 55% or 60% or 65% or 75% |
| 8 | 6 | 25% | 25% or 30% or 35% or 40% or 45% or 50% or 55% or 60% or 65% or 75% |
| 8 | 6 | 30% | 25% or 30% or 35% or 40% or 45% or 50% or 55% or 60% or 65% or 75% |
| 8 | 6 | 35% | 25% or 30% or 35% or 40% or 45% or 50% or 55% or 60% or 65% or 75% |
| 8 | 6 | 40% | 25% or 30% or 35% or 40% or 45% or 50% or 55% or 60% or 65% or 75% |
| 8 | 6 | 45% | 25% or 30% or 35% or 40% or 45% or 50% or 55% or 60% or 65% or 75% |
|   |   |     |     |
| 8 | 7 | 10% | 25% or 30% or 35% or 40% or 45% or 50% |
| 8 | 7 | 15% | 25% or 30% or 35% or 40% or 45% or 50% |
| 8 | 7 | 20% | 25% or 30% or 35% or 40% or 45% or 50% |
| 8 | 7 | 25% | 25% or 30% or 35% or 40% or 45% or 50% |
| 8 | 7 | 30% | 25% or 30% or 35% or 40% or 45% or 50% |
| 8 | 7 | 35% | 25% or 30% or 35% or 40% or 45% or 50% |
| 8 | 7 | 40% | 25% or 30% or 35% or 40% or 45% or 50% |
| 8 | 7 | 45% | 25% or 30% or 35% or 40% or 45% or 50% |
|   |   |     |     |
| 12 | 1 | 10% | 25% or 30% or 35% or 40% or 45% or 50% or 55% or 60% or 65% or 75% |
| 12 | 1 | 15% | 25% or 30% or 35% or 40% or 45% or 50% or 55% or 60% or 65% or 75% |
| 12 | 1 | 20% | 25% or 30% or 35% or 40% or 45% or 50% or 55% or 60% or 65% or 75% |
| 12 | 1 | 25% | 25% or 30% or 35% or 40% or 45% or 50% or 55% or 60% or 65% or 75% |
| 12 | 1 | 30% | 25% or 30% or 35% or 40% or 45% or 50% or 55% or 60% or 65% or 75% |
| 12 | 1 | 35% | 25% or 30% or 35% or 40% or 45% or 50% or 55% or 60% or 65% or 75% |
| 12 | 1 | 40% | 25% or 30% or 35% or 40% or 45% or 50% or 55% or 60% or 65% or 75% |
| 12 | 1 | 45% | 25% or 30% or 35% or 40% or 45% or 50% or 55% or 60% or 65% or 75% |
|   |   |     |     |
| 12 |   | 10% | 25% or 30% or 35% or 40% or 45% or 50% or 55% or 60% or 65% or 75% |
| 12 | 2 | 15% | 25% or 30% or 35% or 40% or 45% or 50% or 55% or 60% or 65% or 75% |
| 12 | 2 | 20% | 25% or 30% or 35% or 40% or 45% or 50% or 55% or 60% or 65% or 75% |
| 12 | 2 | 25% | 25% or 30% or 35% or 40% or 45% or 50% or 55% or 60% or 65% or 75% |
| 12 | 2 | 30% | 25% or 30% or 35% or 40% or 45% or 50% or 55% or 60% or 65% or 75% |
| 12 | 2 | 35% | 25% or 30% or 35% or 40% or 45% or 50% or 55% or 60% or 65% or 75% |
| 12 | 2 | 40% | 25% or 30% or 35% or 40% or 45% or 50% or 55% or 60% or 65% or 75% |
| 12 | 2 | 45% | 25% or 30% or 35% or 40% or 45% or 50% or 55% or 60% or 65% or 75% |
|   |   |     |     |
| 12 | 3 | 10% | 25% or 30% or 35% or 40% or 45% or 50% or 55% or 60% or 65% or 75% |
| 12 | 3 | 15% | 25% or 30% or 35% or 40% or 45% or 50% or 55% or 60% or 65% or 75% |
| 12 | 3 | 20% | 25% or 30% or 35% or 40% or 45% or 50% or 55% or 60% or 65% or 75% |
| 12 | 3 | 25% | 25% or 30% or 35% or 40% or 45% or 50% or 55% or 60% or 65% or 75% |

(continued)

| N | K | Tdc about | Txso about |
|---|---|---|---|
| 12 | 3 | 30% | 25% or 30% or 35% or 40% or 45% or 50% or 55% or 60% or 65% or 75% |
| 12 | 3 | 35% | 25% or 30% or 35% or 40% or 45% or 50% or 55% or 60% or 65% or 75% |
| 12 | 3 | 40% | 25% or 30% or 35% or 40% or 45% or 50% or 55% or 60% or 65% or 75% |
| 12 | 3 | 45% | 25% or 30% or 35% or 40% or 45% or 50% or 55% or 60% or 65% or 75% |
|  |  |  |  |
| 12 | 4 | 10% | 25% or 30% or 35% or 40% or 45% or 50% or 55% or 60% or 65% or 75% |
| 12 | 4 | 15% | 25% or 30% or 35% or 40% or 45% or 50% or 55% or 60% or 65% or 75% |
| 12 | 4 | 20% | 25% or 30% or 35% or 40% or 45% or 50% or 55% or 60% or 65% or 75% |
| 12 | 4 | 25% | 25% or 30% or 35% or 40% or 45% or 50% or 55% or 60% or 65% or 75% |
| 12 | 4 | 30% | 25% or 30% or 35% or 40% or 45% or 50% or 55% or 60% or 65% or 75% |
| 12 | 4 | 35% | 25% or 30% or 35% or 40% or 45% or 50% or 55% or 60% or 65% or 75% |
| 12 | 4 | 40% | 25% or 30% or 35% or 40% or 45% or 50% or 55% or 60% or 65% or 75% |
| 12 | 4 | 45% | 25% or 30% or 35% or 40% or 45% or 50% or 55% or 60% or 65% or 75% |
|  |  |  |  |
| 12 | 5 | 10% | 25% or 30% or 35% or 40% or 45% or 50% or 55% or 60% or 65% or 75% |
| 12 | 5 | 15% | 25% or 30% or 35% or 40% or 45% or 50% or 55% or 60% or 65% or 75% |
| 12 | 5 | 20% | 25% or 30% or 35% or 40% or 45% or 50% or 55% or 60% or 65% or 75% |
| 12 | 5 | 25% | 25% or 30% or 35% or 40% or 45% or 50% or 55% or 60% or 65% or 75% |
| 12 | 5 | 30% | 25% or 30% or 35% or 40% or 45% or 50% or 55% or 60% or 65% or 75% |
| 12 | 5 | 35% | 25% or 30% or 35% or 40% or 45% or 50% or 55% or 60% or 65% or 75% |
| 12 | 5 | 40% | 25% or 30% or 35% or 40% or 45% or 50% or 55% or 60% or 65% or 75% |
| 12 | 5 | 45% | 25% or 30% or 35% or 40% or 45% or 50% or 55% or 60% or 65% or 75% |
|  |  |  |  |
| 12 | 6 | 10% | 25% or 30% or 35% or 40% or 45% or 50% or 55% or 60% or 65% or 75% |
| 12 | 6 | 15% | 25% or 30% or 35% or 40% or 45% or 50% or 55% or 60% or 65% or 75% |
| 12 | 6 | 20% | 25% or 30% or 35% or 40% or 45% or 50% or 55% or 60% or 65% or 75% |
| 12 | 6 | 25% | 25% or 30% or 35% or 40% or 45% or 50% or 55% or 60% or 65% or 75% |
| 12 | 6 | 30% | 25% or 30% or 35% or 40% or 45% or 50% or 55% or 60% or 65% or 75% |
| 12 | 6 | 35% | 25% or 30% or 35% or 40% or 45% or 50% or 55% or 60% or 65% or 75% |
| 12 | 6 | 40% | 25% or 30% or 35% or 40% or 45% or 50% or 55% or 60% or 65% or 75% |
| 12 | 6 | 45% | 25% or 30% or 35% or 40% or 45% or 50% or 55% or 60% or 65% or 75% |
|  |  |  |  |
| 12 | 7 | 10% | 25% or 30% or 35% or 40% or 45% or 50% or 55% or 60% or 65% or 75% |
| 12 | 7 | 15% | 25% or 30% or 35% or 40% or 45% or 50% or 55% or 60% or 65% or 75% |
| 12 | 7 | 20% | 25% or 30% or 35% or 40% or 45% or 50% or 55% or 60% or 65% or 75% |
| 12 | 7 | 25% | 25% or 30% or 35% or 40% or 45% or 50% or 55% or 60% or 65% or 75% |
| 12 | 7 | 30% | 25% or 30% or 35% or 40% or 45% or 50% or 55% or 60% or 65% or 75% |
| 12 | 7 | 35% | 25% or 30% or 35% or 40% or 45% or 50% or 55% or 60% or 65% or 75% |

(continued)

| N | K | Tdc about | Txso about |
|---|---|---|---|
| 12 | 7 | 40% | 25% or 30% or 35% or 40% or 45% or 50% or 55% or 60% or 65% or 75% |
| 12 | 7 | 45% | 25% or 30% or 35% or 40% or 45% or 50% or 55% or 60% or 65% or 75% |
|  |  |  |  |
| 12 | 8 | 10% | 25% or 30% or 35% or 40% or 45% or 50% or 55% or 60% or 65% or 75% |
| 12 | 8 | 15% | 25% or 30% or 35% or 40% or 45% or 50% or 55% or 60% or 65% or 75% |
| 12 | 8 | 20% | 25% or 30% or 35% or 40% or 45% or 50% or 55% or 60% or 65% or 75% |
| 12 | 8 | 25% | 25% or 30% or 35% or 40% or 45% or 50% or 55% or 60% or 65% or 75% |
| 12 | 8 | 30% | 25% or 30% or 35% or 40% or 45% or 50% or 55% or 60% or 65% or 75% |
| 12 | 8 | 35% | 25% or 30% or 35% or 40% or 45% or 50% or 55% or 60% or 65% or 75% |
| 12 | 8 | 40% | 25% or 30% or 35% or 40% or 45% or 50% or 55% or 60% or 65% or 75% |
| 12 | 8 | 45% | 25% or 30% or 35% or 40% or 45% or 50% or 55% or 60% or 65% or 75% |
|  |  |  |  |
| 12 | 9 | 10% | 25% or 30% or 35% or 40% or 45% or 50% or 55% or 60% or 65% or 75% |
| 12 | 9 | 15% | 25% or 30% or 35% or 40% or 45% or 50% or 55% or 60% or 65% or 75% |
| 12 | 9 | 20% | 25% or 30% or 35% or 40% or 45% or 50% or 55% or 60% or 65% or 75% |
| 12 | 9 | 25% | 25% or 30% or 35% or 40% or 45% or 50% or 55% or 60% or 65% or 75% |
| 12 | 9 | 30% | 25% or 30% or 35% or 40% or 45% or 50% or 55% or 60% or 65% or 75% |
| 12 | 9 | 35% | 25% or 30% or 35% or 40% or 45% or 50% or 55% or 60% or 65% or 75% |
| 12 | 9 | 40% | 25% or 30% or 35% or 40% or 45% or 50% or 55% or 60% or 65% or 75% |
| 12 | 9 | 45% | 25% or 30% or 35% or 40% or 45% or 50% or 55% or 60% or 65% or 75% |
|  |  |  |  |
| 12 | 10 | 10% | 25% or 30% or 35% or 40% or 45% or 50% or 55% or 60% or 65% or 75% |
| 12 | 10 | 15% | 25% or 30% or 35% or 40% or 45% or 50% or 55% or 60% or 65% or 75% |
| 12 | 10 | 20% | 25% or 30% or 35% or 40% or 45% or 50% or 55% or 60% or 65% or 75% |
| 12 | 10 | 25% | 25% or 30% or 35% or 40% or 45% or 50% or 55% or 60% or 65% or 75% |
| 12 | 10 | 30% | 25% or 30% or 35% or 40% or 45% or 50% or 55% or 60% or 65% or 75% |
| 12 | 10 | 35% | 25% or 30% or 35% or 40% or 45% or 50% or 55% or 60% or 65% or 75% |
| 12 | 10 | 40% | 25% or 30% or 35% or 40% or 45% or 50% or 55% or 60% or 65% or 75% |
| 12 | 10 | 45% | 25% or 30% or 35% or 40% or 45% or 50% or 55% or 60% or 65% or 75% |
|  |  |  |  |
| 12 | 11 | 10% | 25% or 30% or 35% or 40% or 45% or 50% |
| 12 | 11 | 15% | 25% or 30% or 35% or 40% or 45% or 50% |
| 12 | 11 | 20% | 25% or 30% or 35% or 40% or 45% or 50% |
| 12 | 11 | 25% | 25% or 30% or 35% or 40% or 45% or 50% |
| 12 | 11 | 30% | 25% or 30% or 35% or 40% or 45% or 50% |
| 12 | 11 | 35% | 25% or 30% or 35% or 40% or 45% or 50% |
| 12 | 11 | 40% | 25% or 30% or 35% or 40% or 45% or 50% |
| 12 | 11 | 45% | 25% or 30% or 35% or 40% or 45% or 50% |

The present invention is also directed to an angular sensor system comprising a C-shaped inductive sensor arrangement as described above, and further comprising a semiconductor device connected to the excitation coil(s), and configured for exciting the excitation coil(s) with an alternating current, and connected to the plurality of detection coils, and configured for receiving signals from the detection coils. The semiconductor device may be an interface device, or may further comprise an analog or digital processing circuit. If present, the processing circuit may be configured for determining the angular position of the target relative to the coils based on the received signals.

The angular sensor system may also further comprise a substrate, e.g. in the form of a printed circuit board (PCB), comprising said semiconductor device and said at least one excitation coil and said plurality of detection coils.

The present invention is also directed to a motor assembly comprising an angular sensor arrangement as described above, or an angular sensor system as described above, and further comprising an electrical motor having a rotatable shaft and a housing, wherein the target is configured for rotating along with the rotatable shaft (e.g. by being mounted on the shaft), and wherein the coils are stationary with respect to the motor housing.

**Claims**

1. Angular sensor arrangement for determining an angular position of a target rotatable about an axis, the angular sensor arrangement comprising:

    - said target having a rotational symmetric shape with a number (N) of lobes, the rotational symmetrical shape having an angular periodicity (Tap) of 360° divided by said number (N) of lobes;
    - a coil arrangement comprising at least one excitation coil (301) and a plurality of detection coils (302, 303, 304), wherein the plurality of detection coils define a first opening angle (Roa) smaller than 330°, and wherein the at least one excitation coil (301) defines a second opening angle (Eoa) larger than the first opening angle (Roa);

    **characterized in that**

    - the target has a target duty cycle in the range from 10% to 45%, defined as the ratio of a first area and a second area, the first area being defined by an overlap of a perpendicular projection of a single target lobe on the transmission coils, the second area being defined as the area of the at least one excitation coil over a single electrical period of the target,

    or said lobes of the target define an opening angle (Loa) in the range from 10% to 45% of said angular periodicity (Tap) of the target.

2. Angular sensor arrangement according to claim 1, wherein the number (N) of lobes is a value in the range from 3 to 12.

3. Angular sensor arrangement according to any of the previous claims,

    wherein the target is or comprises a metal sheet;
    or wherein the target is or comprises a substrate with at least one conductive layer.

4. Angular sensor arrangement according to any of the previous claims,

    wherein the target has a disk or annular shape with said number of lobes extending radially outwards from said disk or annular shape, or
    wherein the target has a disk or annular shape with said number of lobes extending radially inwards from said disk or annular shape.

5. Angular sensor arrangement according to any of the previous claims,

    wherein the number of detection coils is at least two, or at least three; or
    wherein the number of detection coils is only two; or
    wherein the number of detection coils is only three.

6. Angular sensor arrangement according to any of the previous claims,
    wherein the at least one excitation coil (301) has a shape defined by a circumference of a first annular sector segment having a first inner radius (R1) and a first outer radius (R4) and said second opening angle (Eoa).

7.  Angular sensor arrangement according to claim 6,
    wherein the plurality of detection coils are located in a second annular sector segment having a second inner radius (R2) and a second outer radius (R3) and said first opening angle (Roa), the second annular segment being located within the first annular segment defined by the at least one excitation coil (301).

8.  Angular sensor arrangement according to any of the previous claims,
    wherein a transmitter coil side opening (Txso) defined as the difference between the opening angle (Eoa) of the at least one excitation coil (301) and the opening angle (Roa) of the at least one detection coil (302, 303, 304) divided by two, is a value in the range from 25% to 75% of the target angular period.

9.  Angular sensor arrangement according to claim 1 or any of claims 3 to 8,

    wherein the target has only five lobes;
    and the angular periodicity (Tap) of the target is 72°;
    and the lobes have an opening angle (Loa) in the range from 13° to 23°;
    and the receiving coils have an angular opening (Rao) in the range from 69° to 75°;
    and the at least one excitation coil (301) has an opening angle (Eoa) of at least 100°.

10. Angular sensor system, comprising:

    an angular sensor arrangement according to any of the previous claims;
    and a semiconductor device operatively connected to the at least one excitation coil (301) and configured for exciting the at least one excitation coil (301) with an alternating current, and operatively connected to the plurality of detection coils (302, 303, 304) and configured for receiving signals from the detection coils, and further configured for determining the angular position of the target relative to the coils based on the received signals.

11. Angular sensor system according to claim 10,
    further comprising a substrate comprising said semiconductor device and said at least one excitation coil (301) and said plurality of detection coils (302, 303, 304).

12. A motor assembly comprising:

    - an electrical motor having a rotatable shaft and a housing;
    - an angular sensor arrangement according to any of the claims 1 to 9, or an angular sensor system according to claim 10 or 11, wherein the target is configured for rotating along with the rotatable shaft, and wherein the coils are stationary with respect to the housing.

**Patentansprüche**

1.  Winkelsensoranordnung zum Bestimmen einer Winkelposition eines um eine Achse drehbaren Ziels, wobei die Winkelsensoranordnung Folgendes umfasst:

    - das Ziel, das eine rotationssymmetrische Form mit einer Anzahl (N) von Vorsprüngen aufweist, wobei die rotationssymmetrische Form eine Winkelperiodizität (Tap) von 360° geteilt durch die Anzahl (N) von Vorsprüngen aufweist;
    - eine Spulenanordnung, die mindestens eine Erregerspule (301) und eine Vielzahl von Erfassungsspulen (302, 303, 304) umfasst, wobei die Vielzahl von Erfassungsspulen einen ersten Öffnungswinkel (Roa) kleiner als 330° definiert und wobei die mindestens eine Erregerspule (301) einen zweiten Öffnungswinkel (Eoa) definiert, der größer als der erste Öffnungswinkel (Roa) ist;

    **dadurch gekennzeichnet, dass**

    - das Ziel ein Ziel-Arbeitsspiel im Bereich von 10 % bis 45 % aufweist, definiert als das Verhältnis eines ersten Bereichs und eines zweiten Bereichs, wobei der erste Bereich durch eine Überlappung eines senkrechten Überstands eines einzelnen Zielvorsprungs an den Sendespulen definiert ist, wobei der zweite Bereich als der Bereich der mindestens einen Erregerspule über eine einzelne elektrische Periode des Ziels definiert ist,

oder die Vorsprünge des Ziels einen Öffnungswinkel (Loa) im Bereich von 10 % bis 45 % der Winkelperiodizität (Tap) des Ziels definieren.

2. Winkelsensoranordnung nach Anspruch 1,
   wobei die Anzahl (N) von Vorsprüngen ein Wert im Bereich von 3 bis 12 ist.

3. Winkelsensoranordnung nach einem der vorstehenden Ansprüche,

   wobei das Ziel ein Metallblech ist oder umfasst;
   oder wobei das Ziel ein Substrat mit mindestens einer leitfähigen Schicht ist oder umfasst.

4. Winkelsensoranordnung nach einem der vorstehenden Ansprüche,

   wobei das Ziel eine Scheiben- oder Ringform aufweist, wobei sich die Anzahl von Vorsprüngen von der Scheiben-oder Ringform radial nach außen erstreckt, oder
   wobei das Ziel eine Scheiben- oder Ringform aufweist, wobei sich die Anzahl von Vorsprüngen von der Scheiben-oder Ringform radial nach innen erstreckt.

5. Winkelsensoranordnung nach einem der vorstehenden Ansprüche,

   wobei die Anzahl von Erfassungsspulen mindestens zwei oder mindestens drei ist; oder
   wobei die Anzahl von Erfassungsspulen nur zwei ist; oder
   wobei die Anzahl von Erfassungsspulen nur drei ist.

6. Winkelsensoranordnung nach einem der vorstehenden Ansprüche,
   wobei die mindestens eine Erregerspule (301) eine Form aufweist, die durch einen Umfang eines ersten ringförmigen Sektorsegments, das einen ersten Innenradius (R1) und einen ersten Außenradius (R4) und den zweiten Öffnungswinkel (Eoa) aufweist, definiert ist.

7. Winkelsensoranordnung nach Anspruch 6,
   wobei sich die Vielzahl von Erfassungsspulen in einem zweiten ringförmigen Sektorsegment, das einen zweiten Innenradius (R2) und einen zweiten Außenradius (R3) und den ersten Öffnungswinkel (Roa) aufweist, befindet, wobei sich das zweite ringförmige Segment innerhalb des ersten ringförmigen Segments, das durch die mindestens eine Erregerspule (301) definiert ist, befindet.

8. Winkelsensoranordnung nach einem der vorstehenden Ansprüche,
   wobei eine Senderspulenseitenöffnung (Txso), die als die Differenz zwischen dem Öffnungswinkel (Eoa) der mindestens einen Erregerspule (301) und dem Öffnungswinkel (Roa) der mindestens einen Erfassungsspule (302, 303, 304) geteilt durch zwei definiert ist, ein Wert im Bereich von 25 % bis 75 % der Ziel-Winkelperiode ist.

9. Winkelsensoranordnung nach Anspruch 1 oder einem der Ansprüche 3 bis 8,

   wobei das Ziel nur fünf Vorsprünge aufweist;
   und die Winkelperiodizität (Tap) des Ziels 72° beträgt;
   und die Vorsprünge einen Öffnungswinkel (Loa) im Bereich von 13° bis 23° aufweisen;
   und die Empfangsspulen eine Winkelöffnung (Rao) im Bereich von 69° bis 75° aufweisen;
   und die mindestens eine Erregerspule (301) einen Öffnungswinkel (Eoa) von mindestens 100° aufweist.

10. Winkelsensorsystem, das Folgendes umfasst:

    eine Winkelsensoranordnung nach einem der vorstehenden Ansprüche,
    und eine Halbleitervorrichtung, die mit der mindestens einen Erregerspule (301) wirkverbunden und zum Erregen der mindestens einen Erregerspule (301) mit einem Wechselstrom konfiguriert ist, und die mit der Vielzahl von Erfassungsspulen (302, 303, 304) wirkverbunden und zum Empfangen von Signalen von den Erfassungsspulen konfiguriert ist und ferner zum Bestimmen der Winkelposition des Ziels relativ zu den Spulen basierend auf den empfangenen Signalen konfiguriert ist.

**11.** Winkelsensorsystem nach Anspruch 10,
ferner umfassend ein Substrat, das die Halbleitervorrichtung und die mindestens eine Erregerspule (301) und die Vielzahl von Erfassungsspulen (302, 303, 304) umfasst.

**12.** Motorbaugruppe, die Folgendes umfasst:

- einen Elektromotor, der eine drehbare Welle und ein Gehäuse aufweist;
- eine Winkelsensoranordnung nach einem der Ansprüche 1 bis 9 oder ein Winkelsensorsystem nach Anspruch 10 oder 11, wobei das Ziel zum Drehen zusammen mit der drehbaren Welle konfiguriert ist und wobei die Spulen in Bezug auf das Gehäuse stationär sind.

**Revendications**

**1.** Agencement de capteur angulaire pour déterminer une position angulaire d'une cible pouvant tourner autour d'un axe, l'agencement de capteur angulaire comprenant :

- ladite cible ayant une forme à symétrie de rotation avec un nombre (N) de lobes, la forme à symétrie de rotation ayant une périodicité angulaire (Tap) de 360° divisée par ledit nombre (N) de lobes ;
- un agencement de bobine comprenant au moins une bobine d'excitation (301) et une pluralité de bobines de détection (302, 303, 304), dans lequel la pluralité de bobines de détection définissent un premier angle d'ouverture (Roa) inférieur à 330°, et dans lequel l'au moins une bobine d'excitation (301) définit un second angle d'ouverture (Eoa) supérieur au premier angle d'ouverture (Roa) ;

**caractérisé en ce que**

- la cible a un rapport cyclique cible dans la plage de 10 % à 45 %, défini comme le rapport d'une première zone et d'une seconde zone, la première zone étant définie par un chevauchement d'une projection perpendiculaire d'un lobe cible unique sur les bobines d'émission, la seconde zone étant définie comme la zone de l'au moins une bobine d'excitation sur une période électrique unique de la cible,

ou lesdits lobes de la cible définissent un angle d'ouverture (Loa) dans la plage de 10 % à 45 % de ladite périodicité angulaire (Tap) de la cible.

**2.** Agencement de capteur angulaire selon la revendication 1,
dans lequel le nombre (N) de lobes est une valeur dans la plage de 3 à 12.

**3.** Agencement de capteur angulaire selon l'une quelconque des revendications précédentes,

dans lequel la cible est ou comprend une tôle métallique ;
ou dans lequel la cible est ou comprend un substrat avec au moins une couche conductrice.

**4.** Agencement de capteur angulaire selon l'une quelconque des revendications précédentes,

dans lequel la cible a une forme de disque ou annulaire avec ledit nombre de lobes s'étendant radialement vers l'extérieur à partir de ladite forme de disque ou annulaire, ou
dans lequel la cible a une forme de disque ou annulaire avec ledit nombre de lobes s'étendant radialement vers l'intérieur à partir de ladite forme de disque ou annulaire.

**5.** Agencement de capteur angulaire selon l'une quelconque des revendications précédentes,

dans lequel le nombre de bobines de détection est d'au moins deux, ou d'au moins trois ; ou
dans lequel le nombre de bobines de détection n'est que de deux ; ou
dans lequel le nombre de bobines de détection n'est que de trois.

**6.** Agencement de capteur angulaire selon l'une quelconque des revendications précédentes,
dans lequel l'au moins une bobine d'excitation (301) a une forme définie par une circonférence d'un premier segment de secteur annulaire ayant un premier rayon interne (R1) et un premier rayon externe (R4) et ledit second angle d'ouverture (Eoa).

7. Agencement de capteur angulaire selon la revendication 6,
dans lequel la pluralité de bobines de détection sont situées dans un second segment de secteur annulaire ayant un second rayon interne (R2) et un second rayon externe (R3) et ledit premier angle d'ouverture (Roa), le second segment annulaire étant situé à l'intérieur du premier segment annulaire défini par l'au moins une bobine d'excitation (301).

8. Agencement de capteur angulaire selon l'une quelconque des revendications précédentes,
dans lequel une ouverture côté bobine émettrice (Txso) définie comme la différence entre l'angle d'ouverture (Eoa) de l'au moins une bobine d'excitation (301) et l'angle d'ouverture (Roa) de l'au moins une bobine de détection (302, 303, 304) divisée par deux, est une valeur dans la plage de 25 % à 75 % de la période angulaire cible.

9. Agencement de capteur angulaire selon la revendication 1 ou l'une quelconque des revendications 3 à 8,

dans lequel la cible n'a que cinq lobes;
et la périodicité angulaire (Tap) de la cible est de 72° ;
et les lobes ont un angle d'ouverture (Loa) dans la plage de 13° à 23° ;
et les bobines réceptrices ont une ouverture angulaire (Rao) dans la plage de 69° à 75° ;
et l'au moins une bobine d'excitation (301) a un angle d'ouverture (Eoa) d'au moins 100°.

10. Système de capteur angulaire, comprenant :

un agencement de capteur angulaire selon l'une quelconque des revendications précédentes ;
et un dispositif à semi-conducteur connecté fonctionnellement à l'au moins une bobine d'excitation (301) et configuré pour exciter l'au moins une bobine d'excitation (301) avec un courant alternatif, et connecté fonctionnellement à la pluralité de bobines de détection (302, 303, 304) et configuré pour recevoir des signaux à partir des bobines de détection, et en outre configuré pour déterminer la position angulaire de la cible par rapport aux bobines sur la base des signaux reçus.

11. Système de capteur angulaire selon la revendication 10,
comprenant en outre un substrat comprenant ledit dispositif à semi-conducteur et ladite au moins une bobine d'excitation (301) et ladite pluralité de bobines de détection (302, 303, 304).

12. Ensemble moteur comprenant :

- un moteur électrique ayant un arbre rotatif et un carter ;
- un agencement de capteur angulaire selon l'une quelconque des revendications 1 à 9, ou un système de capteur angulaire selon la revendication 10 ou 11, dans lequel la cible est configurée pour tourner avec l'arbre rotatif, et dans lequel les bobines sont stationnaires par rapport au carter.

**FIG 1**

(a)

203

201

Tilt axis

(b)

201

203

200

(c)

angular error[°]

| 0 | 45 | 90 | 135 | 180 | 225 | 270 | 315 | 360 | electrical angle [deg] |

0            36         72   mechanical angle [deg]

# FIG 2

## FIG 3(a)

## FIG 3(b)

(a)

R5
R6
R7

401

(b)

R8
R10
R9

402

# FIG 4

A1=overlap of 1 lobe
and the TX coils

A2=overlap of the TX coils
and 1 "electrical period"
of the target

Tdc=A1/A2

(a)                    (b)                    (c)

Loa=36°
Tdc=50%

(d)

R5

R6

Tap=360°/5=72°

# FIG 5

FIG 6

$Tap = 360°/N$
$Roa = K \cdot Tap; K = 1, 2, \ldots, N-1$
$Txso = (Eoa - Roa)/2$

**FIG 7**

(a)

(b)

**FIG 8**

Tdc=50%, Txso=13%

# FIG 9

Tdc=50%, Txso=50%

# FIG 10

(a)

Target duty cycle:

——— 50%

- - - - 25%

(b)

# FIG 11

FIG 12

This side is closer
to the coils

This side is further
away from the coils

(a)

closer to
the coils

further from
the coils

(c)

This side is closer
to the coils

This side is further
away from the coils

(b)

closer to
the coils

further from
the coils

(d)

(e)

Tilt error

Electircal angle [deg]

0    90    180    270    360

# FIG 13

electrical signal noise (a)

intrinsic nonlinearity error (b)

Tx side opening:
——— 50%
----- 25%
—·— 15%
········ 10%
—··— 5%

(c) tilt error

(d) TX side opening = 15%

Error component:
—·— noise
----- tilt
········ intrinsic nonlinearity
——— total

# FIG 14

**FIG 15**

FIG 16

(a)

N=12
K=3
Tdc=25%
Txso=25%

(b)

N=12
K=1
Tdc=25%
Txso=25%

(c)

N=6
K=1
Tdc=25%
Txso=25%

(d)

N=6
K=3
Tdc=25%
Txso=25%

Tap=360°/N
Roa = K*Tp; K=1, 2, ..., N-1
Txso[°] = (Eoa-Roa)/2
Txso[%] = Txso/Tap

(e)

N=6
K=1
Tdc=25%
Txso=25%

# FIG 17

**EP 3 865 825 B1**

**REFERENCES CITED IN THE DESCRIPTION**

**Patent documents cited in the description**

- EP 0909955 A1
- US 2020116529 A1